# EUROPEAN PATENT APPLICATION

(11) **EP 3 065 101 A1**
(43) Date of publication of application: **07.09.2016**
(21) Application number: 15184754.8
(22) Date of filing: 10.09.2015
(51) Int. Cl.: G06Q 20/34, G06Q 20/38, G06Q 20/20

(54) **TERMINAL AND OPERATING METHOD THEREOF**

(30) Priority: 06.03.2015 US 201562129030 P; 22.05.2015 KR 20150071793
(71) Applicant: LG Electronics Inc., Seoul 07336 (KR)
(72) Inventor: HWANG, Keumsung, 137-893 SEOUL (KR); LEE, Minho, 137-893 SEOUL (KR); KIM, Jieun, 137-893 SEOUL (KR); JANG, Hyukjae, 137-893 SEOUL (KR); CHOI, Kyungdong, 137-893 SEOUL (KR)
(74) Representative: Cabinet Plasseraud

(57) **Abstract**

A terminal is provided. The terminal receives store information including payment information for payment to a store corresponding to a payment terminal and based on the received store information, generates at least one recommended payment combination information including at least two different types of information compatible with the store information. The terminal transmits, to the payment terminal, information for payment corresponding to one of the at least one recommended payment combination information.

## Description

### BACKGROUND

The present disclosure relates to a terminal and an operating method thereof, and more particularly, to a terminal providing a payment function.

Terminals may be classified into mobile/portable terminals and stationary terminals depending on the mobility. The mobile terminals may be classified into handheld terminals and vehicle mounted terminals depending on direct portability by a user.

As the functions of the terminals are diversified, the terminals are being implemented as multimedia players having complex functions including taking a picture, recording a video, playing music or video files, gaming or receiving a broadcast.

Also, various financial services using the terminals are being recently provided. So-called "Fintech" is a compound word derived from "Finance" and "Technology" to denote a service in which finance and information technology (IT) are combined, or a company that provides such a service. The most actively proliferating field of Fintech is the payment field in which card information stored in a terminal is transmitted via the terminal to pay for goods or services.

The payment through the terminals is expected to be a main payment means in the future due to convenience of not needing to carry a plastic card and increased security to avoid exposure of personal information such as a card number and a name of a card user.

Recently, credit cards have become commonly used means for payment, and with the development of various discount services and point rewarding services, discount cards or point cards are now being commonly used in connection with payment.

Thus, consumers present discount cards for discount and point cards or bonus cards for collecting points in addition to credit cards, debit cards or cash when paying for goods or services.

When various cards are kept by users, users may have a difficulty in properly receiving benefits that the users may be able to receive because benefits that the users may receive vary according to combinations of cards that may be used in a specific store.

In particular, as the number and types of cards that the users may have increase, combinations of credit cards, point cards, discount cards and the like that may be used for payment become complex and thus, the users may fail to properly utilize benefits that they may be able to take advantage of to the full extent.

Thus, there are needs for a payment means and method capable of providing an optimal payment combination that the users may use for payment to stores.

### SUMMARY

Embodiments provide a terminal that receives payment information unique to stores and provides a payment function according to a payment combination corresponding to the received payment information.

Embodiments also increase the security of a payment function via terminals by employing user authentication.

In one embodiment, a method for operating a terminal configured to transmit information for payment to a payment terminal includes: receiving store information for payment to a store corresponding to the payment terminal via a wireless communication unit configured to communicate with the payment terminal, the store information including payment information; generating at least one recommended payment combination information based on the received store information, one of the at least one recommended payment combination information including at least two different types of information that are compatible with the store information; and transmitting, to the payment terminal, the information for payment corresponding to one of the at least one recommended payment combination information.

In another embodiment, a terminal configured to transmit information for payment to a payment terminal includes: a display; a wireless communication unit configured to communicate with the payment terminal corresponding to a store; and a controller configured to: receive store information for payment to the store via the wireless communication unit, the store information including payment information; generate at least one recommended payment combination information based on the received store information, one of the at least one recommended payment combination information including at least two different types of information that are compatible with the store information; and cause the wireless communication unit to transmit, to the payment terminal, the information for payment corresponding to one of the at least one recommended payment combination information.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram of a payment system according to an embodiment.
Fig. 2 is a block diagram of a terminal related to an embodiment.
Fig. 3 illustrates a terminal having a front fingerprint recognition sensor according to an embodiment.
Fig. 4 illustrates a terminal having a rear fingerprint recognition sensor according to an embodiment.
Fig. 5 is a block diagram of a payment terminal related to an embodiment.
Fig. 6 is a flowchart of an operating method of a payment system according to an embodiment.
Fig. 7 illustrates a screen displayed at a terminal according to obtained store information according to an embodiment.
Fig. 8 illustrates displaying of payment combination information according to an embodiment.
Fig. 9 illustrates displaying of payment combination information according to another embodiment.
Fig. 10A illustrates a user input to a recommended payment combination information window according to an embodiment.
Fig. 10B illustrates a changed recommended payment combination display screen according to an embodiment.
Fig. 11A illustrates a user input to a recommended payment combination information window according to another embodiment.
Fig. 11B illustrates a changed recommended payment combination screen according to another embodiment.
Fig. 12A illustrates a user input for replacing a card included in a payment combination according to an embodiment.
Fig. 12B illustrates displaying of a new payment combination according to a card obtained through replacement according to an embodiment.
Fig. 13A illustrates a user input for replacing a card included in a payment combination according to another embodiment.
Fig. 13B illustrates displaying of a new payment combination according to a card obtained through replacement according to another embodiment.
Fig. 14 illustrates displaying of an information window for a recommended payment combination according to an embodiment.
Fig. 15 illustrates displaying of payment combination information according to another embodiment.
Fig. 16 illustrates a user input for payment according to an embodiment.
Fig. 17 illustrates a user input for payment according to another embodiment.
Fig. 18 illustrates a user input for payment according to another embodiment.
Fig. 19 illustrates a user input for payment according to another embodiment.
Fig. 20 illustrates a user input for payment according to another embodiment.
Fig. 21 illustrates fingerprint recognition for payment according to an embodiment.
Fig. 22 represents a user input for payment related to a direction corresponding to a payment terminal according to an embodiment.
Fig. 23 represents a user input path for payment according to an embodiment.
Fig. 24 illustrates a touch pattern recognition of a user according to an embodiment.
Fig. 25 illustrates a touch pattern recognition of a user according to another embodiment.
Fig. 26 is a conceptual view of a packet structure of a payment signal having a multi data structure according to an embodiment.
Figs. 27 and 28 illustrate displaying of a payment status according to an embodiment.
Fig. 29 illustrates displaying of a payment status according to another embodiment.
Figs. 30 and 31 illustrate displaying of a payment status on a side display of a mobile terminal according to an embodiment.
Fig. 32 illustrates displaying of payment approval information according to an embodiment.
Figs. 33A and 33B illustrate a user input for displaying another payment approval information according to an embodiment.
Fig. 34 illustrates displaying of an integrated card image according to an embodiment.

### DETAILED DESCRIPTION OF THE EMBODIMENTS

Hereinafter, embodiments are described in detail with reference to the accompanying drawings and regardless of the numbers of the drawings, same or similar components are assigned with the same reference numerals and thus repetitive descriptions for those are omitted. Since the suffixes "module" and "unit" for components used in the following description are given and interchanged for easiness in making the present disclosure, they do not have distinct meanings or functions. In describing the embodiments disclosed in the present disclosure, detailed descriptions of related known technologies will be omitted because they would obscure the subject of the embodiments disclosed in the present disclosure. Also, the accompanying drawings are used to help easily understanding embodiments disclosed herein but the technical idea disclosed in the present disclosure is not limited thereto. It should be understood that all of variations, equivalents or substitutes contained in the concept and technical scope of the inventive concept are also included.

Although the terms 'first' and 'second' may be used to describe various components, these components should not be limited to these terms. The terms are used only in order to distinguish a component from another component.

When it is mentioned that any component is "connected" or "accessed" to another component, it should be understood that the former can be directly connected to the latter, or there may be another component in between. On the contrary, when any component is referred to as being 'directly connected' or 'directly accessed' to another component, it should be understood that there may be no other component in between.

The terms in singular form include the plural form unless otherwise specified.

It should be understood that the term "includes" or "has" indicates the presence of characteristics, numbers, steps, operations, components, parts or combinations thereof represented in the present disclosure but does not exclude the presence or addition of one or more other characteristics, numbers, steps, operations, components, parts or combinations thereof.

The terminals described in the present disclosure may include a smart phone, a laptop computer, a digital broadcast terminal, a personal digital assistant (PDA), a portable multimedia player (PMP), a navigation device, a slate PC, a tablet PC, an ultra book, and a wearable device, e.g., a smart watch, a smart glass, or a head mounted display (HMD).

However, a person skilled in the art may easily appreciate that a configuration according to an embodiment described herein may be applied to fixed terminals, such as a digital TV, a desktop computer, a digital signage, except when the configuration may be applied to only the mobile terminals.

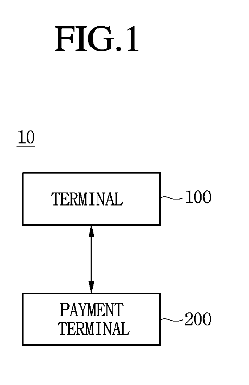

A payment system 10 according to an embodiment is described with reference to Fig. 1. Fig. 1 is a block diagram of a payment system according to an embodiment. Referring to Fig. 1, the payment system 10 includes a terminal 100 and a payment terminal 200. The payment terminal 200 may mean a point of sale (POS) terminal.

The terminal 100 may display various information related to payment and transmit payment information to the payment terminal 200. In addition, the terminal 100 may receive approval information from the payment terminal 200 in response to the payment information transmitted to the payment terminal 200 and display the received approval information. In this example, the payment information or information for payment may mean card information.

The payment terminal 200 may receive payment information related to payment from the terminal 100 and process the payment based on the received payment information. Further, the payment terminal 200 may transmit, to the terminal 100, approval information according to the payment that has been processed.

Also, the payment terminal 200 may transmit, to the terminal 100, store information relating to a store at which the payment terminal 200 is located. In this example, the store information may include one or more of location information on the store, information on goods or services that the store provides, and discount information on the store. In addition, the store information may include payment information unique to the store. The payment information unique to the store may include one or more of information on a payment means that may be used at a corresponding store, the unique payment order of the store, and discount information according to a payment means. The unique payment order of the store may mean the payment order among a payment means such as a credit card, a debit card, or cash, a point collecting means, such as a point card, for a point awarding service, and a discount means, such as a discount card, for a discount service. For example, the unique payment order of store A may be in the order of the point card, the discount card and the payment card. In addition, the unique payment order of store B may be in the order of the discount card, the point card and the payment card. In addition, the unique payment order of store C may be in the order of the payment card, the discount card and the point card. As such, the unique payment order of a store may be different or the same for each store.

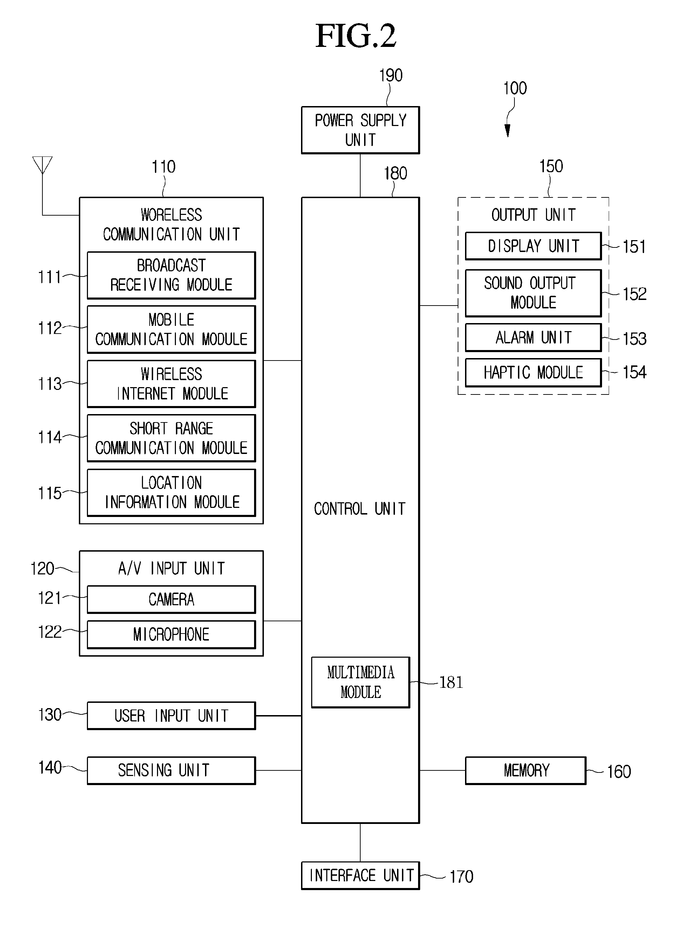

Next, the structure of the terminal 100 according to an embodiment is described with reference to Fig. 2. Fig. 2 is a block diagram of a terminal related to an embodiment.

The terminal 100 may include a wireless communication unit 110, an audio/video (AV) input unit 120, a user input unit 130, a sensing unit 140, an output unit 150, a memory 160, an interface unit 170, a control unit 180 or controller, and a power supply unit 190. Since the components shown in Fig. 2 are not essential, a terminal having components more or less than those may also be implemented.

In the following, the components above are discussed one by one.

The wireless communication unit 110 may include one or more module that enable wireless communication between the terminal 100 and a wireless communication system, between the terminal 100 and other terminals 100, the terminal 100 and other devices, or the terminal 100 and external servers. Also the wireless communication unit 110 may include one or more modules that connect the terminal 100 to one or more networks.

The wireless communication unit 110 may include at least one of a broadcast receiving module 111, a mobile communication module 112, a wireless Internet module 113, a short-range communication module 114, and a location information module 115.

The broadcast receiving module 111 receives a broadcast signal and/or broadcast related information from an external broadcast management server through a broadcast channel.

The broadcast channel may include a satellite channel or a terrestrial channel. The broadcast management server may indicate a server that generates and transmits a broadcast signal and/or broadcast related information, or a server that receives a pre-generated broadcast signal and/or broadcast related information and transmits them to a terminal. The broadcasting signal may include a broadcasting signal formed by combining a TV broadcasting signal with a radio broadcasting signal, in addition to a TV broadcasting signal, a radio broadcasting signal, and a data broadcasting signal.

The broadcast related information may mean information on a broadcast channel, a broadcast program or a broadcast service provider. The broadcast related information may also be provided through a mobile communication network. In this case, the information may be received by the mobile communication module 112.

The broadcast related information may exist in various forms. For example, it may exist in the form of an electronic program guide (EPG) of digital multimedia broadcasting (DMB) or an electronic service guide (ESG) of digital video broadcast-handheld (DVB-H).

The broadcast receiving module 111 may receive a digital broadcast signal by using a digital broadcasting system such as a digital multimedia broadcasting-terrestrial (DMB-T) broadcasting system, a digital multimedia broadcasting-satellite (DMB-S) broadcasting system, a media forward link only (MediaFLO) broadcasting system, a digital video broadcast-handheld (DVB-H) broadcasting system, or an integrated services digital broadcast-terrestrial (ISDB-T) broadcasting system. The broadcast receiving module 111 may also be configured to be suitable for other broadcasting systems in addition to the above-described digital broadcasting systems.

A broadcast signal and/or broadcast related information received through the broadcast receiving module 111 may be stored in the memory 160.

The mobile communication module 112 transmits and receives a wireless signal to and from at least one of a base station, an external terminal and a server on a mobile communication network. The wireless signal may include various types of data depending on the transmission and reception of a voice call signal, a video call signal or a text/ multimedia message.

The wireless Internet module 113 indicates a module for wireless Internet access and may be internal or external to the terminal 100. As a wireless Internet technology, wireless LAN (WLAN, Wi-Fi), wireless broadband (Wibro), world interoperability for microwave access (Wimax), high speed downlink packet access (HSDPA) or the like may be used.

The short range communication module 114 indicates a module for short range communication. As the short range communication technology, Bluetooth, radio frequency identification (RFID), infrared data association (IrDA), ultra wideband (UWB), ZigBee or the like may be used. Also, the short range communication module 114 may also transmit a magnetic signal.

The location information module 115 is a module for obtaining the location of a terminal (or the current location) and typically includes a global positioning system (GPS) module or WiFi module. For example, the terminal may use a signal transmitted from a GPS satellite to obtain the location of the terminal, when the GPS module is utilized. As another example, the terminal may obtain the location of the terminal based on information on the wireless access point (AP) transmitting or receiving a wireless signal to or from the WiFi module when the WiFi module is utilized. As needed, the location information module 115 may perform any function of other modules of the wireless communication unit 110 in order to alternatively or additionally obtain data on the location of the terminal. The location information module 115 is a module used to obtain the location of the terminal (the current location) and is not limited to a module directly calculating or obtaining the location of the terminal.

Referring to Fig. 2, the AV input unit 120 is used to input an audio signal or video signal and may include a camera 121 and a microphone 122. The camera 121 processes an image frame such as a still image or video obtained by an image sensor in a video call mode or imaging mode. The processed image frame may be displayed on the display unit 151.

The image frame processed by the camera 121 may be stored in the memory 160 or externally transmitted through the wireless communication unit 110. The camera 121 may be arranged in plurality depending on the usage environment.

The microphone 122 receives an external sound signal in a call mode, a recording mode, or a voice recognition mode and changes the signal to electrical voice data. In the call mode, the voice data may be converted into a format that may be transmitted to a mobile communication base station through the mobile communication module 112, and the data obtained through conversion may be output to the mobile communication base station. Various noise removing algorithms for removing noise generated in a process of receiving an external sound signal may be implemented in the microphone 122.

The user input unit 130 may include the camera 121 or an image input unit for an image signal input, the microphone 122 or an audio input unit for an audio signal input, and a touch key or a mechanical key for receiving information from a user. Voice data or image data collected by the user input unit 130 may be analyzed and processed as a user's control command.

The sensing unit 140 may include at least one sensor for sensing information on the inside of the terminal, information on ambient environment surrounding the terminal, and user information. For example, the sensing unit 140 may include at least one of an illumination sensor, a touch sensor, a magnetic sensor, a G-sensor, a gyroscope sensor, a motion sensor, an RGB sensor, an infrared (IR) sensor, a finger scan sensor, an ultrasonic sensor, an optical sensor (for example, the camera 121), a microphone 122, a battery gauge, an environmental sensor (for example, a barometer, a hygrometer, a thermometer, a radiation sensor, a thermal sensor, and a gas sensor), and a chemical sensor (for example, an electronic noise, a healthcare sensor, and a biometric sensor). Moreover, a terminal disclosed in this specification may combines information sensed by at least two or more sensors among such sensors and may then utilize it.

The output unit 150 is used to generate a visual, auditory, or haptic output and may include at least one of a display unit 151, a sound output module 152, an alarm unit 153, and a haptic module 154. The display unit 151 may be formed with a mutual layer structure with a touch sensor or formed integrally, so that a touch screen may be implemented. Such a touch screen may serve as the user input unit 130 providing an input interface between the terminal 100 and a user and an output interface between the terminal 100 and a user at the same time.

The display unit 151 displays (outputs) information processed by the terminal 100. For example, when the terminal is in the call mode, the display unit 151 displays user interface (UI) or graphic user interface (GUI) related to a call. When the terminal 100 is in the video call mode or in the imaging mode, the display unit 151 displays an imaged and/or received image, the UI, or the GUI.

The display unit 151 may include at leas one of a liquid crystal display (LCD), a thin film transistor-liquid crystal display (TFT LCD), an organic light-emitting diode (OLED), a flexible display, and a 3D display.

Some of the displays may be configured as transparent or optically transferable to enable viewing of the outside therethrough. The displays may be referred to as transparent displays which include a transparent OLED (TOLED) as a typical example. The back structure of the display unit 151 may also be configured as optically transferable. Due to such a structure, a user may see objects located at the back side of a terminal body through a region which the display unit 151 of the terminal body occupies.

Depending on the implementation of the terminal 100, the display unit 151 may exist in plurality. For example, a plurality of display units may be arranged on one surface of the terminal 100 at intervals or integrally or on different surfaces.

When the display unit 151 and a sensor sensing a touch operation (hereinafter, referred to as a 'touch sensor') form a mutual layer structure (hereinafter, referred to as a 'touch screen'), the display unit 151 may also be used as an input device in addition to an output device. The touch sensor may be in the form of a touch film, a touch sheet, a touch pad, for example.

The touch sensor may be configured to convert a change in pressure applied to a specific part of the display unit 151 or capacitance generated on a specific part of the display unit 151 into an electrical input signal. The touch sensor may also be configured to be capable of detecting pressure and capacitance when being touched, in addition to a touched location and area.

When there is a touch input to the touch sensor, corresponding signal(s) are transmitted to a touch control unit. The touch control unit processes signal(s) and then transmits corresponding data to the control unit 180. Accordingly, the control unit 180 may be aware of which region of the display unit 151 has been touched.

Also, the control unit 180 may determine the type of a user's touch input based on the area, pressure and capacitance when being touched. Thus, the control unit 180 may identify a user's finger touch, nail touch, knuckle touch and multi touch using a plurality of fingers.

The sensing unit 140 may include a proximity sensor arranged in the internal region of the terminal surrounded by the touch screen or near the touch screen. The proximity sensor indicates a sensor that detects the absence and presence of an object approaching or near a certain subject surface without mechanical contact by using the force of an electromagnetic field or an infrared ray. The lifetime of the proximity sensor may be longer than that of a contact sensor and the utilization of the proximity sensor is also higher than that.

Examples of the proximity sensor include a transmissive photoelectric sensor, a direct reflective photoelectric sensor, a mirror reflective photoelectric sensor, a high-frequency oscillating proximity sensor, a capacitive proximity sensor, a magnetic proximity sensor, and an infrared proximity sensor. When the touch screen is of a capacitive type, it is configured to detect the proximity of a pointer by using a change in electric field due to the proximity of the pointer. In this case, the touch screen (touch sensor) may be classified as a proximity sensor.

For the convenience of description, an action of recognizing that the pointer approaches the touch screen and is located on the touch screen without a contact is referred to as a "proximity touch" and an action made when the pointer is in actual contact with the touch screen is referred to as a "contact touch". The position where the proximity touch is made with the pointer over the touch screen means the position where the pointer is perpendicular to the touch screen when the pointer makes the proximity touch.

The proximity sensor senses the proximity touch and proximity touch patterns (e.g., a proximity touch distance, a proximity touch direction, a proximity touch speed, a proximity touch time, a proximity touch position, and a proximity touch change state). Information corresponding to the sensed proximity touch operation and proximity touch patterns may be displayed on the touch screen.

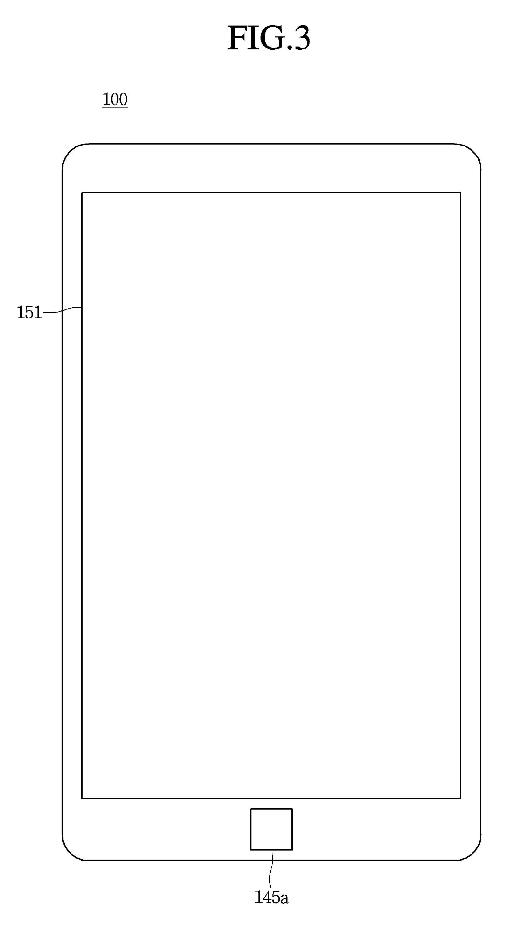

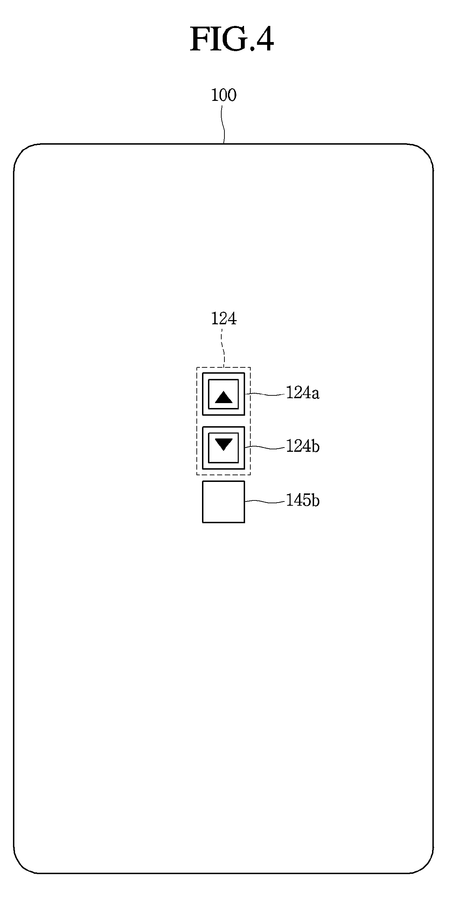

The sensing unit 140 may also include a fingerprint recognition sensor 145 (shown as 145a and 145b in Figs. 3 and 4, respectively) that recognizes the fingerprint of a user. The fingerprint recognition sensor 145 may recognize the fingerprint of a user through a front fingerprint recognition sensor 145a on the front surface of the terminal 100 and a rear fingerprint recognition sensor 145b on the rear surface of the terminal 100. The fingerprint recognition sensor is described in detail with reference to Figs. 3 and 4.

Fig. 3 illustrates a terminal having a front fingerprint recognition sensor according to an embodiment.

Referring to Fig. 3, the terminal 100 may have a front fingerprint recognition sensor 145a at the lower end of the front surface of the terminal 100. The front fingerprint recognition sensor 145a may recognize the fingerprint of a user and transmit fingerprint information of the recognized fingerprint to the control unit 180. Also, the front fingerprint recognition sensor 145a may be in the form of a push key, so it is also possible to receive a physical push input from a user.

Fig. 4 illustrates a terminal having a rear fingerprint recognition sensor according to an embodiment.

Referring to Fig. 4, the terminal 100 may have a rear fingerprint recognition sensor 145b on the rear surface of the terminal 100. The rear fingerprint recognition sensor 145b may recognize the fingerprint of a user and transmit fingerprint information on the recognized fingerprint to the control unit 180. Also, the rear fingerprint recognition sensor 145b may be in the form of a push key, so it is also possible to receive a physical push input from a user.

The terminal 100 may have a rear key 124 on the rear surface of the terminal 100. The rear key 124 may include an upper key 124a and a lower key 124b. The rear key 124 may also be a physical key or touch key. Also, the rear key 124 may be a touch key that enables a physical push input.

Referring back to Fig.2, the sound output module 152 may output audio data received from the wireless communication unit 110 or stored in the memory 160 in a call signal receiving mode, a call mode, a recording mode, a voice recognition mode, and a broadcast receiving mode. The sound output module 152 outputs a sound signal related to a function (for example, a call signal receiving sound and a message receiving sound) performed by the terminal 100. The sound output unit 152 may include a receiver, a speaker, and a buzzer.

The alarm unit 153 outputs a signal for notifying that the terminal 100 has an event. An example of the event that the terminal has includes call signal reception, message reception, a key signal input, a touch input, or the like. The alarm unit 153 may also output a signal for notifying that there is an event, in another form excluding a video signal or audio signal, e.g., by using vibration. Since the video signal or audio signal may also be output through the display unit 151 or the sound output module 152, they may also be classified as parts of the alarm unit 153.

The haptic module 154 generates various haptic effects that a user can feel. A representative example of a haptic effect that the haptic module 154 generates is vibration. The intensity and pattern of vibration generated by the haptic module 154 may be controlled. For example, the haptic module 154 may synthesize and output different vibrations or output different vibrations sequentially.

The haptic module 154 may generate various haptic effects, for example, effects by a pin arrangement moving vertical to a contact skin surface, injection power or suction power of air through an injection port or a suction port, rubbing a skin surface, electrode contact, stimulus of electrostatic force and effects by the reproduction of cold/warm sense by using a device absorbing or emitting heat.

The haptic module 154 may be implemented to deliver a haptic effect through a direct contact and also allow a user to feel a haptic effect through a muscle sense such as a finger or an arm. The haptic module 154 may be in plurality according to a configuration aspect of the terminal 100.

Also, the haptic module 154 may include a vibration device that may generate vibration. For example, the haptic module 154 may include one or more vibration motors, which may be in various forms, such as a bar form or a coin form.

In addition, the haptic module 154 may be disposed at various locations according to the form of the terminal 100.

Also, the memory 160 stores data supporting various functions of the terminal 100. The memory 160 may store a plurality of application programs (for example, application programs or applications) running on the terminal 100 and also data and commands for operations of the terminal 100. At least some of these application programs may be downloaded from an external server through a wireless communication. Also, at least some of these application programs may be included in the terminal 100 from the time of shipment in order to perform a basic function (for example, call receiving/transmitting functions and message receiving and transmitting functions) of the terminal 100. Moreover, an application program may be stored in the memory 160 and installed on the terminal 100 so that it may run to perform an operation (or a function) of the terminal 100 by the control unit 180.

Also, the memory 160 stores payment information associated with various payment means. For example, the memory 160 may store information on payment cards for payment, such as credit cards or debit cards, information on point cards for rewarding points or mileages, and information on discount cards for discount.

The memory 160 may include as a storage medium, at least one of a flash memory type memory, a hard disk type memory, a multimedia card micro type memory, a card type memory (for example, a secure digital (SD) or extreme digital (XD) memory), a random access memory (RAM), a static RAM (SRAM), a read-only memory (ROM), a programmable ROM (PROM), an electrically erasable PROM (EEPROM), a magnetic RAM (MRAM), a magnetic disk and an optical disk type memory. The terminal 100 may also operate in relation to a web storage performing a storage function of the memory 160 on Internet.

The interface unit 170 may serve as a path to all home devices connected to the terminal 100. The interface unit 170 may receive data from an external device, receive power and deliver it to each component in the terminal 100, or transmit data in the terminal 100 to an external device. For example, the interface unit 170 may include a wired/wireless headset port, an external charger port, a wired/wireless data port, a memory card port, a port connecting a device equipped with an identification module, an audio I/O port, a video I/O port, and an earphone port.

The identification module, as a chip storing various information for authenticating usage authority of the terminal 100, may include a user identity module (UIM), a subscriber identity module (SIM), and a universal subscriber identity module (USIM). A device equipped with an identification module (hereinafter referred to as an identification device) may be manufactured in a smart card form. Accordingly, the identification device may be connected to the terminal 100 through the interface unit 170.

When the terminal 100 is connected to an external cradle, the interface unit 170 may become a path through which power of the cradle is supplied to the terminal 100 or a path through which various command signals inputted from the cradle are delivered to the terminal 100 by a user. The various command signals or the power inputted from the cradle may operate as a signal for recognizing that the terminal 100 is accurately mounted on the cradle.

The control unit 180 typically controls the overall operations of the terminal. For example, the control unit 180 performs the control and processing associated with voice calls, data communication, and video calls. The control unit 180 may also include a multimedia module 181 for playing multimedia. The multimedia module 181 may be implemented in the control unit 180, or may be implemented separately from the control unit 180.

The control unit 180 may perform pattern recognition processing through which a handwritten input or a drawing input performed on the touch screen may be recognized as a character and image.

The control unit 180 may transmit payment information stored in the memory 160 to the payment terminal 200 through the short range communication module 114. In addition, the control unit 180 may cause displaying of various information related to payment on the display unit 151.

The power supply unit 190 receives internal power or external power under the control of the control unit 180 and provides power required for the operation each of components.

Various embodiments described herein may be implemented in e.g., a recording medium that may be read with a computer or a similar device by using software, hardware or a combination thereof.

According to a hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers), microprocessors, and other electrical units for performing functions. In some cases, the embodiments may be implemented by the control unit 180.

According to software implementation, embodiments associated with procedures or functions may be implemented along with a separate software module that performs at least one function or operation. Software codes may be implemented by software applications that are written in proper programming languages. The software codes may be stored in the memory 160 and may be executed by the control unit 180.

The above-described terminal 100 may also be a handheld terminal or a vehicle mount terminal. Thus, the terminal 100 may be in the form that a user carries in person or in the form that is mounted on a certain region.

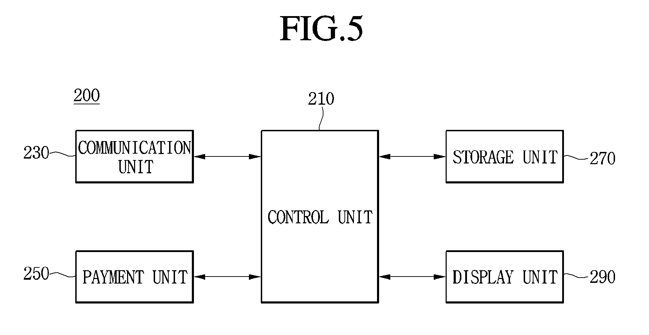

Next, the payment terminal 200 according to an embodiment is described with reference to Fig. 5. Fig. 5 is a block diagram of a payment terminal related to an embodiment.

Referring to Fig. 5, the payment terminal 200 may include a control unit 210, a communication unit 230, a payment unit 250, a storage unit 270, and a display unit 290.

The control unit 210 may control the overall operations of the payment terminal 200. The control unit 210 may cause transmission of one or more of store information and unique payment information to the terminal 100 via the communication unit 230. In addition, the control unit 210 may receive payment information from the terminal 100 via the communication unit 230 or the payment unit 250.

The control unit 210 may process payment for goods or services based on the received payment information. In addition, the control unit 210 may cause transmission, to the terminal 100, of approval information according to the processed payment.

The communication unit 230 may communicate with the terminal 100 via one or more of Bluetooth, radio frequency identification (RFID), infrared data association (IrDA), ultra wideband (UWB), ZigBee, and near field communication (NFC). The communication unit 230 may also transmit or receive a magnetic signal. The communication unit 230 may also transmit various signals in the form of a high frequency signal.

For example, the payment unit 250 may obtain payment information from a plastic card. For example, the payment unit 250 may obtain payment information from the magnetic stripe, integrated circuit (IC) chip of the plastic card.

The storage unit 270 may store one or more of store information and unique payment information. The storage unit 270 may also store approval information according to the processed payment.

The display unit 290 may display various information related to payment. For example, the display unit 290 may display payment information obtained via the communication unit 230 or the payment unit 250 and approval information according to the processed payment.

Operations of the payment system 10 according to an embodiment are described based on the above descriptions.

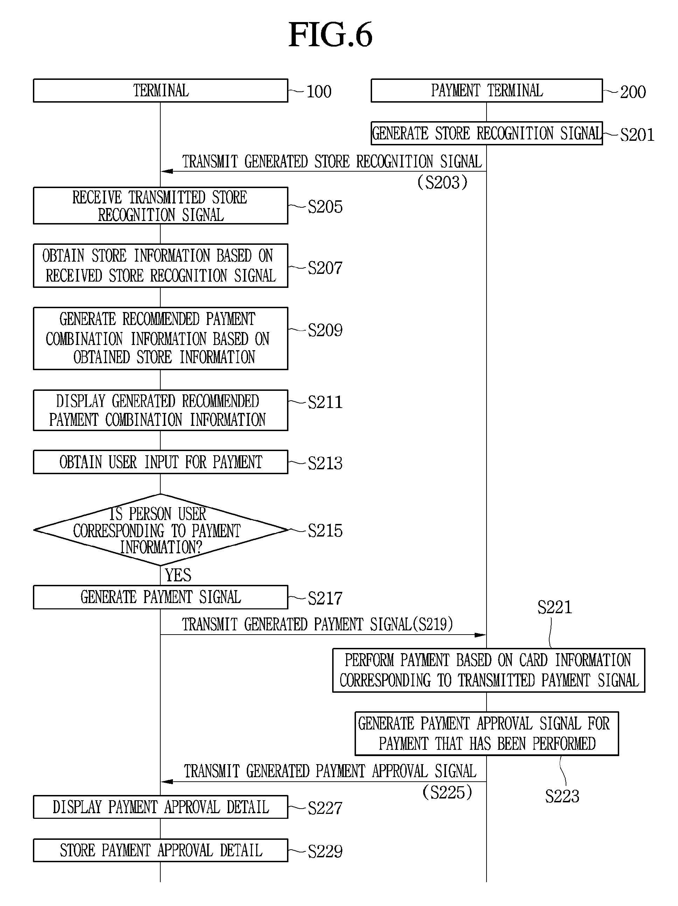

Fig. 6 is a flowchart of an operating method of the payment system 10 according to an embodiment. Referring to Fig. 6, the control unit 210 of the payment terminal 200 generates a store recognition signal that is a unique signal for recognizing a store, in step S201.

The control unit 210 may generate a store recognition signal that is a unique signal for recognizing a store at which the payment terminal 200 is located. The store recognition signal generated by the control unit 210 may include one or more of a store name, a store location, goods or services provided by a store, payment means that may be used at a store, discount information according to the payment means that may be used, and information on the unique payment order of a store.

The control unit 210 of the payment terminal 200 transmits the generated store recognition signal to the terminal 100 via the communication unit 230, in step S203.

In an embodiment, the control unit 210 may transmit, to the terminal 100, the generated store recognition signal by using a Bluetooth low energy (BLE) technology via the communication unit 230. In this example, the BLE technology transmitting the store recognition signal may be a technology corresponding to known beacon. Also, the control unit 210 may transmit the generated store recognition signal to the terminal 100 by using an RFID technology via the communication unit 230. Also, the control unit 210 may transmit the generated store recognition signal to the terminal 100 by using an NFC technology via the communication unit 230. Also, the control unit 210 may transmit the generated store recognition signal to the terminal 100 by using a high frequency technology via the communication unit 230. In this example, the high frequency at which the store recognition signal is transmitted may correspond to a frequency domain that a user may not recognize.

Also, the payment terminal 200 may transmit the above-described store recognition signal to the terminal 100 through a repeater (not shown). For example, the repeater (not shown) in a store at which the payment terminal 200 is located or within a certain distance from the store may receive the store recognition signal from the payment terminal 200 and transmit the received store recognition signal to the terminal 100.

The description of the transmission of the above-described store recognition signal is only provided as an example and the embodiment is not limited thereto. Thus, the payment terminal 200 may transmit the generated store recognition signal by using various technologies according to a user's or designer's choice.

The terminal 100 receives the transmitted store recognition signal in step S205, and obtains store information based on the received store recognition signal in step S207.

The control unit 180 of the terminal 100 may receive the store recognition signal transmitted through the short range communication module 114 or the microphone 122. In an embodiment, the control unit 180 may receive the store recognition signal transmitted by using the BLE technology via the short range communication module 114. The control unit 180 may also receive the store recognition signal transmitted by using the high frequency technology via the microphone 122.

The description of the reception of the above-described store recognition signal is only provided for an example and the embodiment is not limited thereto. Thus, the terminal 100 may receive the store recognition signal by using various technologies according to the form of the store recognition signal transmitted by the payment terminal 200.

The control unit 180 of the terminal 100 may obtain store information including unique payment information related to the payment method of a store based on the received store recognition signal. In this example, payment information unique to a store may include one or more of information on a payment means that may be used at a store at which the payment terminal 200 transmitting the store recognition signal is located, the unique payment order of a store, and discount information according to a payment means. In this example, the discount information according to the payment means may include information on one or more of a discount rate according to the payment means, a point awarding rate for a point card, and a discount rate for a discount card. In addition, the unique payment order of a store may mean the payment order among payment cards that are payment means such as credit cards or debit cards, point cards for point rewarding services, and discount cards for discount services.

In an embodiment, the control unit 180 may obtain store information included in the store recognition signal based on the received store recognition signal.

In another embodiment, the control unit 180 may search for store information matching the received store recognition signal based on the received store recognition signal, and obtain store information matching the received store recognition signal based on a searched result. For example, the control unit 180 may search for store information matching the received store recognition signal from among one or more pieces of unique payment information stored in the memory 160 or the server (not shown). In addition, the control unit 180 may obtain store information matching the received store recognition signal based on a searched result.

The control unit 180 may obtain, from the obtained store information, a payment means that may be used at a store at which the payment terminal 200 transmitting the store recognition signal is located, discount information according to the payment means that may be used, rewarding information or the like.

For example, the control unit 180 may obtain, from the obtained store information, the payment means that may be used at a store at which the payment terminal 200 is located, and discount information on a payment means, and may obtain information on a rewarding service that may be used at a store at which the payment terminal 200 is located. The control unit 180 may also obtain, from the obtained store information, information on a discount service.

The control unit 180 may cause displaying, on the display unit 151, of store information on a store at which the terminal 100 is located, based on the received store recognition signal. In addition, the control unit 180 may cause displaying, on the display unit, of a store information reception notification window representing that store information has been obtained.

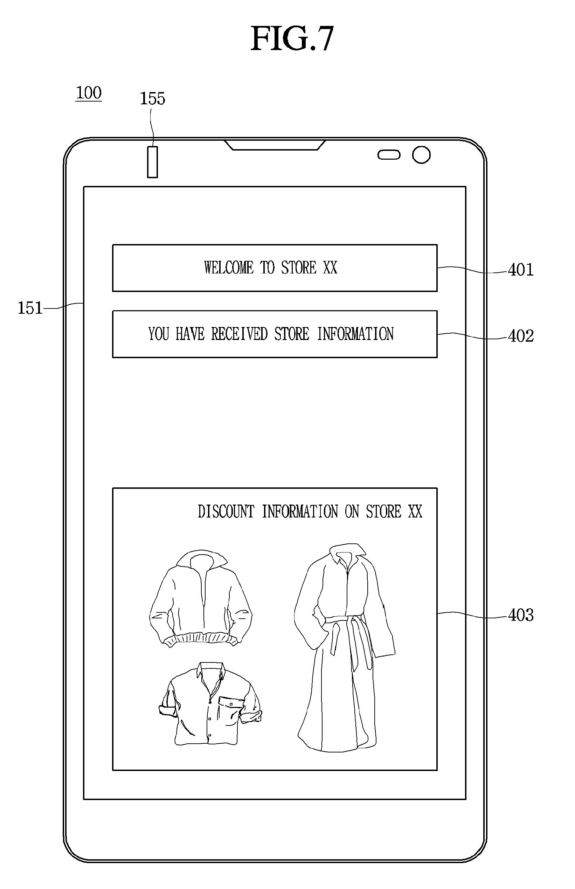

Related descriptions are provided with reference to Fig. 7. Fig. 7 illustrates displaying a screen according to the obtained store information according to an embodiment. Referring to Fig. 7, the control unit 180 may cause displaying of obtained store information on the display unit 151. The control unit 180 may cause displaying of a store message 401 corresponding to a received store recognition signal. In addition, the control unit 180 may cause displaying, on the display unit 151, of a store information reception notification window 402 notifying that store information matching the received store recognition signal has been obtained. The control unit 180 may also cause displaying, on the display unit 151, of a store discount information window 403 displaying discount information on a store, based on the obtained store information.

The control unit 180 may cause emission of light from an alarm LED when receiving the store recognition signal or obtaining store information corresponding to the received store recognition signal. The control unit 180 may also enable the alarm unit 153 to generate vibration when receiving the store recognition signal or obtaining store information corresponding to the received store recognition signal. For example, the alarm unit 153 may generate vibration notifying that the store recognition signal has been received.

Referring back to FIG. 6, the control unit 180 of the terminal 100 generates, based on the obtained store information, recommended payment combination information that may be used in a store, in step S209.

The control unit 180 may generate, based on store information corresponding to the payment terminal 200, payment combination information on one or more payment combinations that may be used when payment is performed at a store at which the payment terminal 200 is located.

For example, the control unit 180 may obtain, based on the store information corresponding to the payment terminal 200, information on each of a payment means, a rewarding means, and a discount means that may be used at the store at which the payment terminal 200 is located. In addition, the control unit 180 may generate, based on the store information, payment combination information on one or more payment combinations among the payment means, the rewarding means, and the discount means that may be used at the store when the payment is made. For example, the control unit 180 may calculate, based on the obtained store information, one or more of a discount rate and a rewarding rate according to the payment combination, may also generate, as a recommended payment combination, a payment combination in which one or more of the calculated discount rate and rewarding rate has a higher value compared to a threshold value. Thus, the control unit 180 may generate payment combination information on a plurality of payment combinations including a payment combination in which the discount rate of a payment means, the rewarding rate of a rewarding means, and the discount rate of a discount means that may be used when payment is performed at a store has the highest value. Also, when the payment combination information is generated, the control unit 180 may reflect whether to subtract a point or mileage according to a discount and generate the payment combination information. Thus, the control unit 180 may also generate payment combination information including a discount means which subtracts the point or mileage, and a payment combination including a discount means that does not subtract the point or mileage.

The control unit 180 of the terminal 100 causes displaying of the generated payment combination information on the display unit 151 in step S211. The control unit 180 may cause displaying on the display unit 151 of information on one or more payment combinations based on the generated payment combination information.

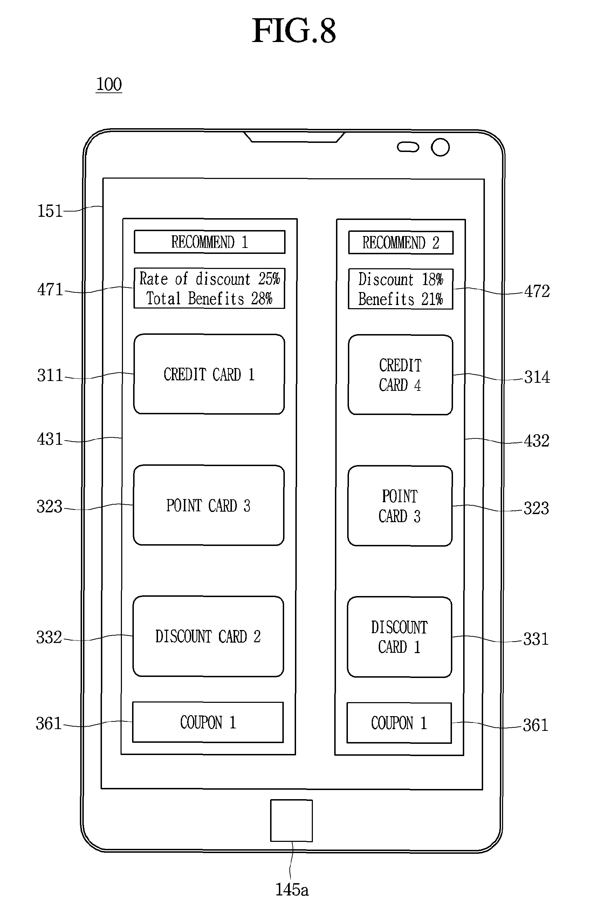

Related descriptions are provided with reference to Fig. 8. Fig. 8 illustrates displaying payment combination information according to an embodiment.

Referring to Fig. 8, the control unit 180 may cause displaying on the display unit 151 of information on one or more recommended payment combinations based on the generated payment combination information. The control unit 180 may cause displaying, on the display unit 151, of a first recommended payment combination information window 431 for a first recommended payment combination, and a second recommended payment combination information window 432 for a second recommended payment combination.

The control unit 180 may cause displaying, in the first recommendation payment combination window 431, of a benefit information window 471 that represents a rate of discount and total benefits according to the first recommendation payment combination. In addition, the control unit 180 may cause displaying, in the displayed benefit information window 471, of information on the rate of discount and total benefits when payment is made with the first recommendation payment combination. In this example, the total benefits may mean a numerical value that includes the rate of discount and a rate of rewarding. Thus, the total benefits may mean a numerical value for a maximum benefit that includes the rate of discount according to a payment means and a discount means and a rate of rewarding according to a rewarding means.

Further, the control unit 180 may cause displaying, in the first recommended combination information window 431, of one or more of a card image and information on a card corresponding to each of a payment means, a discount means and a rewarding means that are included in the first recommended payment combination. For example, when the first recommended payment combination includes a first credit card, a third point card, a second discount card, and a first coupon, the control unit 180 may cause displaying, in the first recommendation payment combination information window 431, of an image of each of the first credit card, the third point card, the second discount card, and the first coupon. For example, the control unit 180 may cause displaying, in the first recommended payment combination information window 431, of a first credit card image 311 corresponding to the first credit card, a third point card image 323 corresponding to the third point card, a second discount card image 332 corresponding to the second discount card, and a first coupon image 361 corresponding to the first coupon, as shown in Fig. 8.

Furthermore, the control unit 180 causes displaying, on the display unit 151, of the second recommended payment combination information window 432 on second recommended payment combination information that is different from the first recommended payment combination information. The control unit 180 may cause displaying, in the second recommended payment combination information window 432 on the second recommended payment combination information, of a benefit information window 472 that represents a rate of discount and total benefits according to the second recommended payment combination.

Moreover, the control unit 180 may cause displaying, in the second recommended payment combination information window 432, of an image of each of a fourth credit card, the third point card, a first discount card, and the first coupon that are included in the second recommended payment combination. Thus, the control unit 180 may cause displaying, in the second recommended payment combination information window 432, of a fourth credit card image 314 corresponding to the fourth credit card, the third point card image 323 corresponding to the third point card, a first discount card image 331 corresponding to the first discount card, and the first coupon image 361 corresponding to the first coupon.

The control unit 180 may cause displaying, on the display unit 151, of the second recommended payment combination information window 432 in a size that is different from a size of the first recommended payment combination information window 431. For example, the control unit 180 may cause displaying, on the display unit 151, of the second recommended payment combination information window 432 in a size that is smaller than a size of the first recommended payment combination information window 431, as shown in Fig. 8.

The control unit 180 may cause displaying of information transmission methods that may be used for a card image corresponding to each of the payment means, the discount means and the rewarding means that are displayed in the recommended payment combination information window.

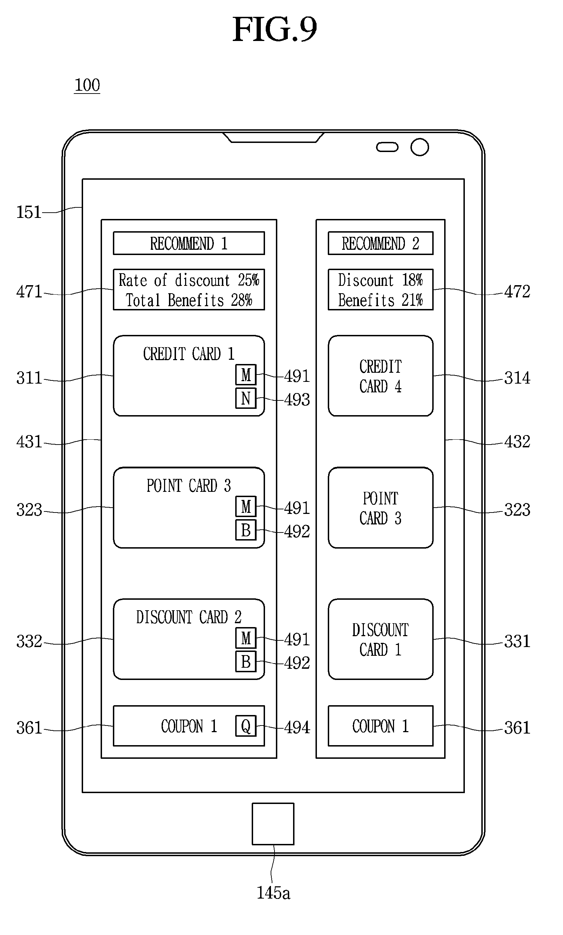

Related descriptions are provided with reference to Fig. 9. Fig. 9 illustrates displaying payment combination information according to another embodiment.

Referring to Fig. 9, the control unit 180 may cause displaying on the display unit 151 of the first recommended payment combination information window 431 for the first recommended payment combination, and the second recommended payment combination information window 432 for the second recommended payment combination. The control unit 180 may cause displaying, in the first recommended payment combination information window 431, the first credit card image 311 corresponding to the first credit card, the third point card image 323 corresponding to the third point card, the second discount card image 332 corresponding to the second discount card, and the first coupon image 361 corresponding to the first coupon.

Further, the control unit 180 may cause displaying of a transmission method marker that represents an information transmission method that may be used for each of the first credit card image 311, the third point card image 323, the second discount card image 332, and the first coupon image 361 that are displayed. For example, the control unit 180 may cause displaying, in the first credit card image 311, a magnetic marker 491 corresponding to a magnetic method and a near field communication (NFC) marker 493 corresponding to an NFC method when the magnetic method and the NFC method are usable for the first credit card. In this example, the magnetic method may mean a method that uses a magnetic signal, and the NFC method may mean a method that uses NFC communication. When the magnetic method and a barcode method are usable for the third point card, the control unit 180 may cause displaying, in the third point card image 323, the magnetic marker 491 corresponding to the magnetic method and a barcode marker 492 corresponding to the barcode method. In this example, the barcode method may mean a method that uses a barcode. Further, the control unit 180 may cause displaying, in the third discount card image 332, the magnetic marker 491 corresponding to the magnetic method and the barcode marker 492 corresponding to the barcode method when the magnetic method and the barcode method are usable for the second discount card. Furthermore, when a quick response (QR) code method is usable for the first coupon, the control unit 180 may cause displaying, in the first coupon image 361, of the QR code marker 494. In this example, the QR code marker may mean a method that uses a QR code. Moreover, the control unit 180 may also cause displaying, in the displayed card image, of a transmission method marker representing a transmission method for the second recommended payment combination information window 432, for the second recommended payment combination displayed on the display unit 151.

The control unit 180 may cause displaying of a transmission method marker according to a degree of recommendation for a transmission method, when a plurality of transmission method markers are displayed on the card image. For example, the control unit 180 may cause displaying, on the display unit 151, of a transmission method marker corresponding to a transmission method having a high degree of recommendation so that the transmission method marker is distinguished from other transmission method markers.

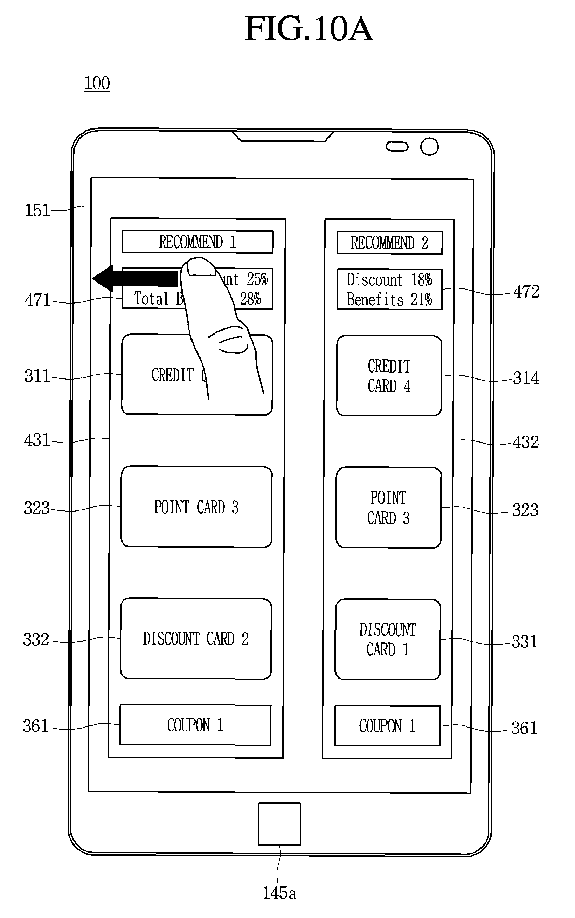

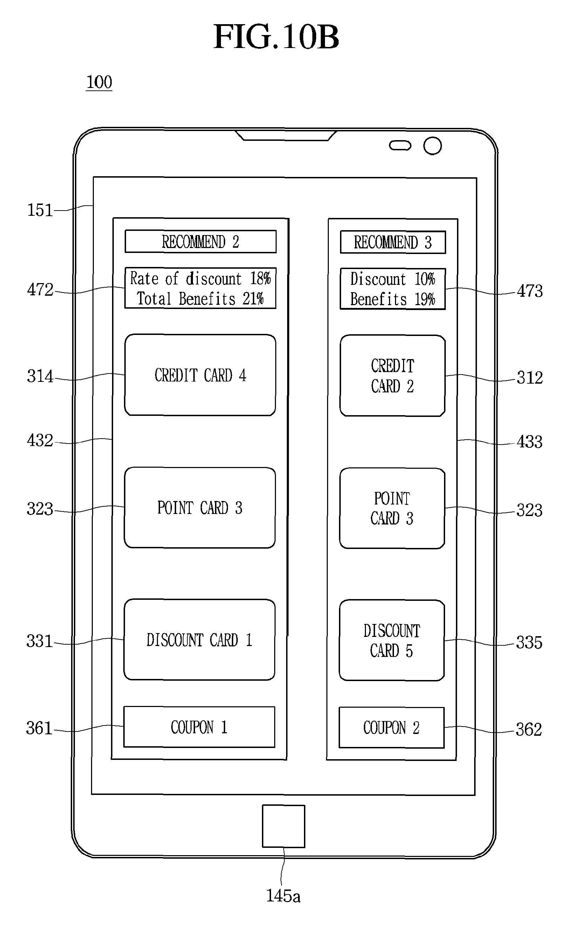

The control unit 180 may also cause displaying of information on other recommended payment combinations excluding the displayed recommended payment combinations, according to a user input to the recommended payment combination information window displayed on the display unit 180. Related descriptions are provided with reference to Figs. 10a and 10b.

Fig. 10A illustrates a user input to a recommended payment combination information window according to an embodiment. Fig. 10B illustrates a changed recommended payment combination display screen according to an embodiment.

Referring to Fig. 10A, the control unit 180 may cause displaying, on the display unit 151, of the first recommended payment combination information window 431 for the first recommended payment combination and the second recommended payment combination information window 432 for the second recommended payment combination. Further, the control unit 180 may recognize a user input for displaying information on a new recommended payment combination instead of the first and second recommended payment combinations currently displayed. For example, the user input may be swiping, in the left direction, on the first recommended payment combination information window 431 displayed on the display unit 151.

In response to the user input, for example, swiping, the control unit 180 may cause displaying, on the display unit 151, of the second recommended payment combination information window 432 for the second recommended payment combination and a third recommended payment combination information window 433 for a third recommended payment combination, as shown in Fig. 10B. Further, the control unit 180 may cause displaying, in the third recommended payment combination information window 433, of a benefic information window 473 that represents a rate of discount and total benefits according to the third recommended payment combination. Furthermore, the control unit 180 may cause displaying, in the third recommended payment combination information window 433, of a second credit card image 312, a third point card image 323, a fifth discount card image 335, and a second coupon image 362 corresponding respectively to a second credit card, the third point card, a fifth discount card, and a second coupon that are included in the third recommended payment combination.

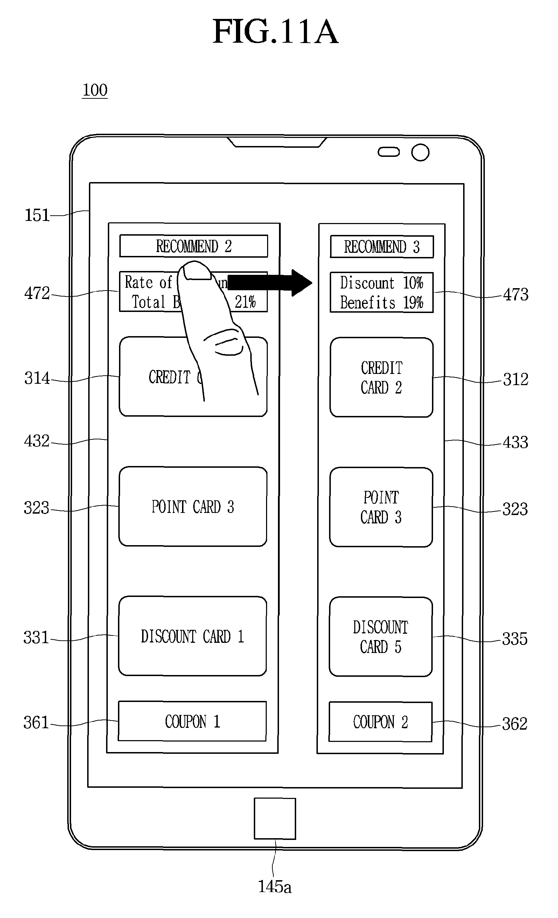

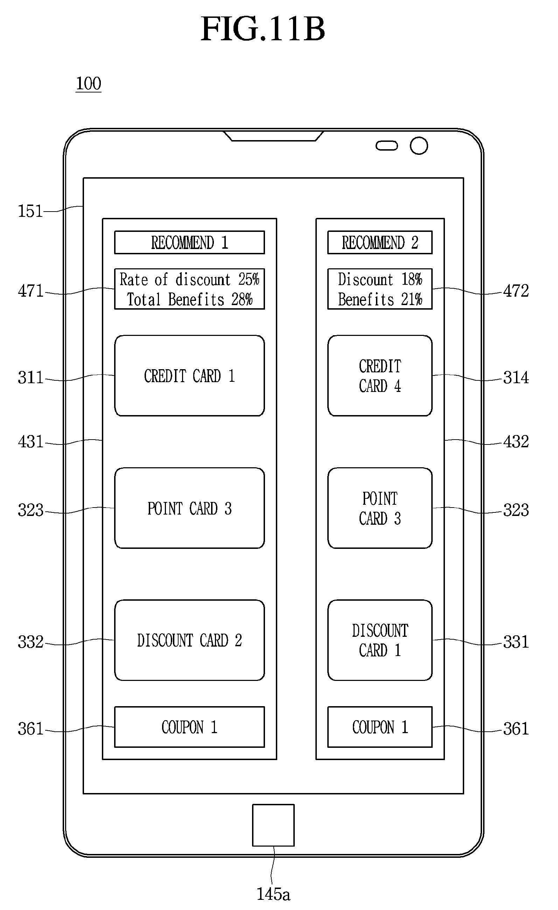

The control unit 180 may also cause displaying, on the display unit 151, of information about a previously displayed recommended payment combination when a user input for displaying information about the previously displayed recommended payment combination is received. Related descriptions are provided with reference to Figs. 11A and 11B.

Fig. 11A illustrates a user input to a recommended payment combination information window according to another embodiment. Fig. 11B illustrates a changed recommended payment combination screen according to another embodiment.

Referring to Fig. 11A, the control unit 180 may cause displaying, on the display unit 151, of the second recommended payment combination information window 432 for the second recommended payment combination and the third recommended payment combination information window 433 for the third recommended payment combination. Further, the control unit 180 may recognize a user input for displaying information about the first recommended payment combination that was displayed previously. For example, the user input may be swiping, in the right direction, on the second recommended payment combination information window 432 displayed on the display unit 151.

In response to the user input, the control unit 180 may cause displaying, on the display unit 151, of the first recommended payment combination information window 431 for the first recommended payment combination and the second recommended payment combination information window 432 for the second recommended payment combination, as shown in Fig. 11B.

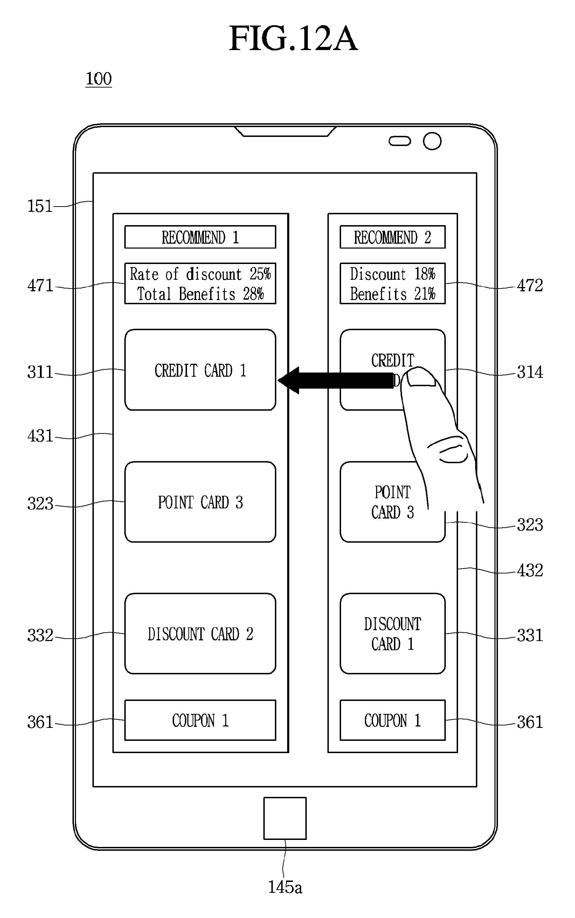

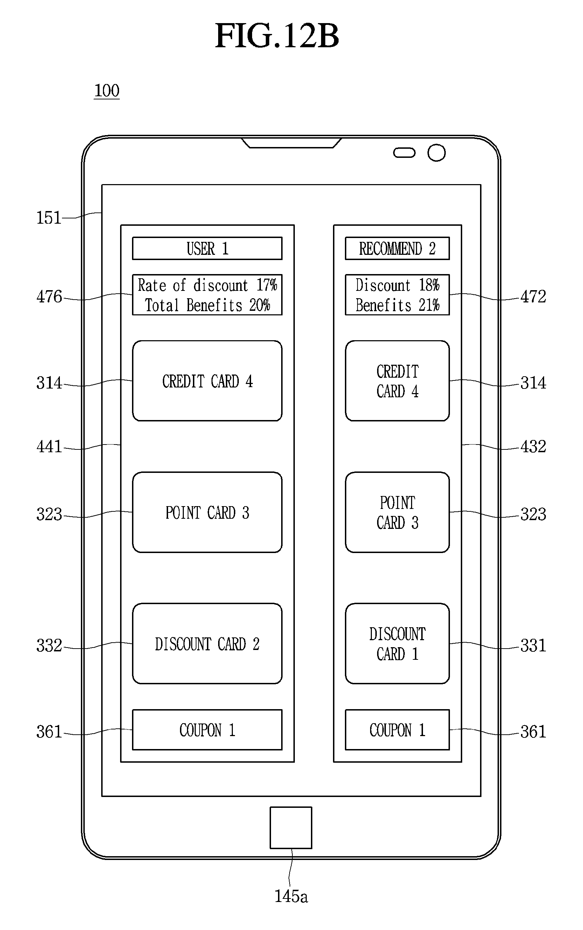

In one embodiment, when the control unit 180 recognizes a user input for replacing a single card image included in a recommended payment combination information window with another card image, it may change first card information corresponding to the single card image selected to second card information corresponding to a card image obtained through replacement to generate new payment combination information. This embodiment is described with reference to Figs. 12A and 12B.

Fig. 12A illustrates a user input for replacing a card included in a payment combination according to an embodiment. Fig. 12B illustrates displaying a new payment combination according to a card obtained through replacement according to an embodiment.

Referring to Fig. 12A, the control unit 180 may cause displaying, on the display unit 151, of the first recommended payment combination information window 431 for the first recommended payment combination and the second recommended payment combination information window 432 for the second recommended payment combination. The control unit 180 may recognize a user input including dragging of the fourth credit card image 314 included in the second recommended payment combination information window 432 and dropping it into the first credit card image 311 included in the first recommended payment combination information window 431, the user input recognized as an user input for replacing the first credit card included in the first recommended payment combination with the fourth credit card.

In response to the user input, the control unit 180 may generate a first user payment combination that replaces the first credit card included in the first recommended payment combination with the fourth credit card. Thus, the control unit 180 may cause displaying, on the display unit 151, of the first user payment combination information window 441 for the first user payment combination and the second recommended payment combination information window 432 for the second recommended payment combination, as shown in Fig. 12B. The control unit 180 may cause displaying, in the first user payment combination information window 441, of the fourth credit card image 314 corresponding to the fourth credit card, the third point card image 323 corresponding to the third point card, the second discount card image 332 corresponding to the second discount card, and the first coupon image 361 corresponding to the first coupon, according to the first user payment combination of which the first credit card in the first payment recommended combination has been replaced with the fourth credit card. Further, the control unit 180 may cause displaying, in the first user payment combination information window 441, of a benefit information window 476 that represents a rate of discount and total benefits according to the first user payment combination.

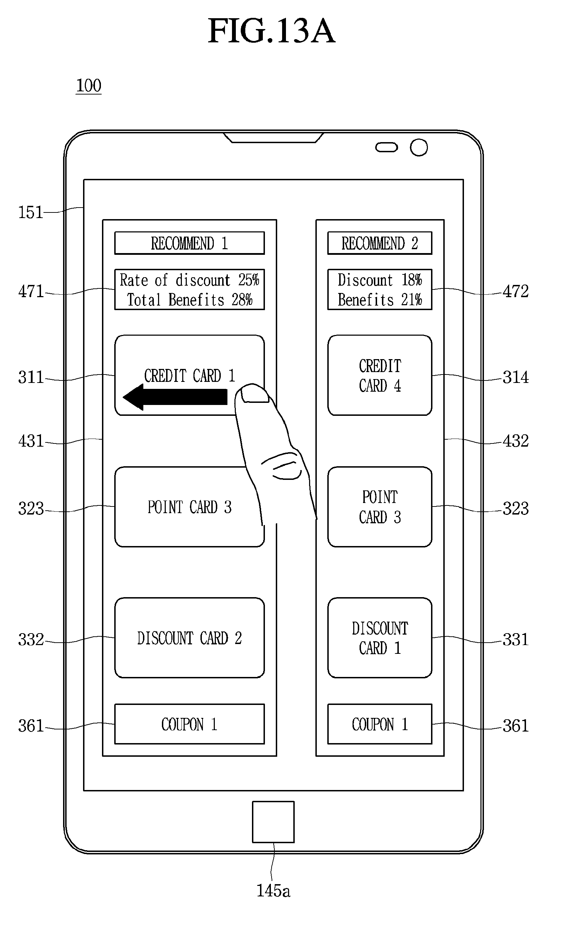

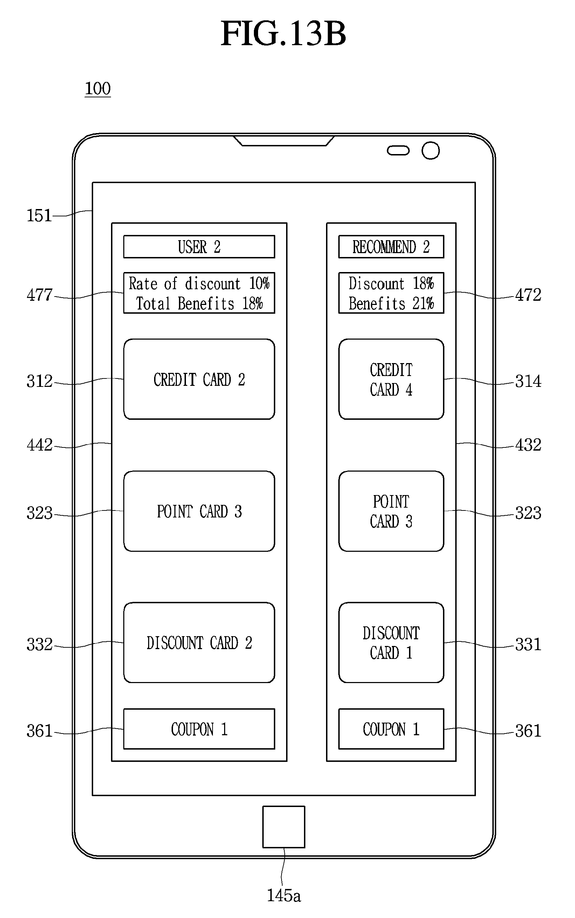

Another embodiment is described with reference to Figs. 13A and 13B. Fig. 13A illustrates a user input for replacing a card included in a payment combination according to another embodiment. Fig. 13B illustrates displaying a new payment combination according to a card obtained through replacement according to another embodiment.

Referring to Fig. 13A, the control unit 180 may cause displaying, on the display unit 151, of the first recommended payment combination information window 431 for the first recommended payment combination and the second recommended payment combination information window 432 for the second recommended payment combination. The control unit 180 may recognize a user input including swiping, in one direction, on the first credit card image 311 included in the first recommended payment combination, as a user input for replacing the first credit card with another credit card. Thus, the control unit 180 may generate a user payment combination that replaces the first credit card included in the first recommended payment combination with another credit card. For example, the control unit 180 may recognize a user input that includes swiping, in the left direction, on the first credit card image 311 included in the first recommended payment combination, as a user input for replacing the first credit card with another credit card. In the first recommended payment combination, the control unit 180 may generate a user payment combination that replaces the first credit card with the second credit card.

In response to the user input, the control unit 180 may cause displaying, on the display unit 151, of a second user payment combination information window 442 for the second user payment combination generated and the second recommended payment combination information window 432 for the second recommended payment combination, as shown in Fig. 13B. The control unit 180 may also cause displaying, in the second user payment combination information window 442, of the second credit card image 312 corresponding to the second credit card, the third point card image 323 corresponding to the third point card, the second discount card image 332 corresponding to the second discount card, and the first coupon image 361 corresponding to the first coupon, according to the second user payment combination of which the first credit card in the first payment recommended combination has been replaced with the second credit card. Further, the control unit 180 may cause displaying, on the second user payment combination information window 442, of a benefit information window 477 that represents a rate of discount and total benefits according to the second user payment combination.

When there is a better recommended payment combination in terms of a rate of discount or total benefits compared with the recommended payment combination corresponding to the recommended payment combination information window currently displayed on the display unit 151, the control unit 180 may cause displaying of an information window representing information about a corresponding recommended payment combination.

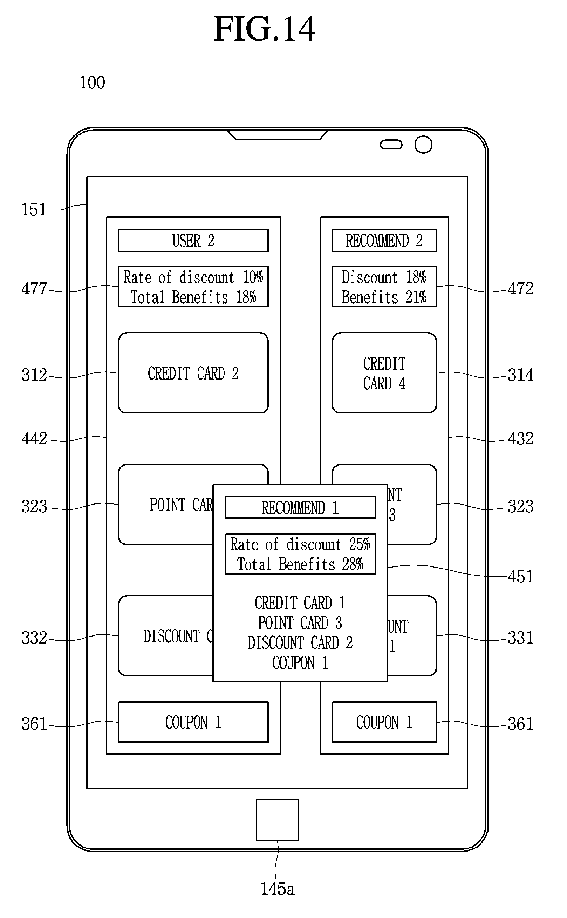

Related descriptions are provided with reference to Fig. 14. Fig. 14 illustrates displaying an information window for a recommended payment combination according to an embodiment.

Referring to Fig. 14, the control unit 180 may cause displaying, on the display unit, of the second user payment combination information window 442 according to a user choice and the second recommended payment combination information window 432. When there is a better recommended payment combination available in terms of a rate of discount or total benefits compared to the second user payment combination and the second recommended payment combination displayed on the display unit 151, the control unit 180 may cause displaying, on the display unit 151, of an information window representing information about a corresponding better recommended payment combination.

For example, the control unit 180 causes displaying of a popup window 451 representing information about the first recommended payment combination that is better in terms of a rate of discount and total benefits compared to the second user payment combination and the second recommended payment combination, as shown in Fig. 14. The control unit 180 may cause displaying of a rate of discount and total benefits according to the first recommended payment combination in the popup window 451 representing information about the first recommended payment combination. The control unit 180 may also cause displaying of a payment means, a rewarding means, a discount means, and a coupon that are included in the first recommended payment combination.

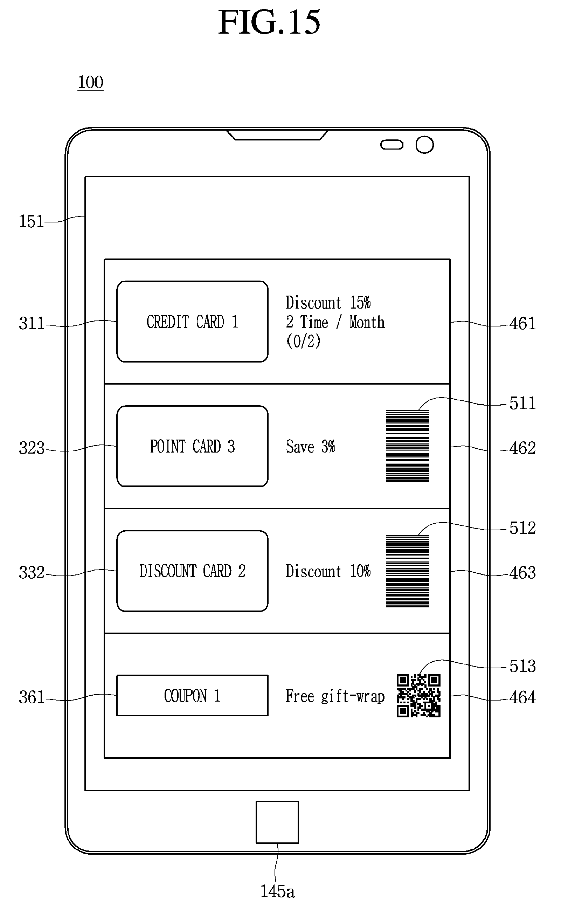

In one embodiment, the control unit 180 may also cause displaying, on the display unit 151, of only information about a recommended payment combination that is best in terms of a rate of discount or total benefits among a plurality of recommended combinations. Related descriptions are provided with reference to Fig. 15. Fig. 15 illustrates displaying payment combination information according to another embodiment.

Referring to Fig. 15, the control unit 180 may also cause displaying, on the display unit 151, of information about the first recommended payment combination that is best in terms of a rate of discount or total benefits among a plurality of recommended combinations that may be used at a store. In particular, the control unit 180 may cause displaying, on the display unit 151, of a first block 461, a second block 462, a third block 463, and a fourth block 464 for the first credit card, the third point card, the second discount card, and the first coupon, respectively, that are included in the first recommended payment combination. Further, the control unit 180 may cause displaying, in the first block 461, of the first credit card image 311 corresponding to the first credit card, a rate of discount of the first credit card, and discount conditions. The control unit 180 may cause displaying, in the second block 462, of the third point card image 323 corresponding to the third point card, a rate of rewarding of the third point card, and a barcode 511 corresponding to the third point card. The control unit 180 may cause displaying, in the third block 463, of the second discount card image 332 corresponding to the second discount card, a rate of discount of the second discount card, and a barcode 512 corresponding to the second discount card. The control unit 180 may cause displaying, in the fourth block 464, of the first coupon image 361 corresponding to the first coupon, benefit information of the first coupon, and a QR code 513 corresponding to the first coupon.

The descriptions on how to display the recommendation payment combination information as described above are only examples and the embodiment is not limited thereto. Thus, it is possible to display information about the recommendation payment combination through various methods according to a user or designer choice.

Referring back to Fig. 6, the control unit 180 of the terminal 100 recognizes a user input for paying for goods or services to the payment terminal 200 waiting for payment in step S213, the user input received in response to the displayed recommendation payment combination information. The terminal 100 may receive a user input for paying for the goods or services to the payment terminal 200 waiting for payment, the user input recognized by the control unit 180 based on one of at least one generated recommended payment combination information.

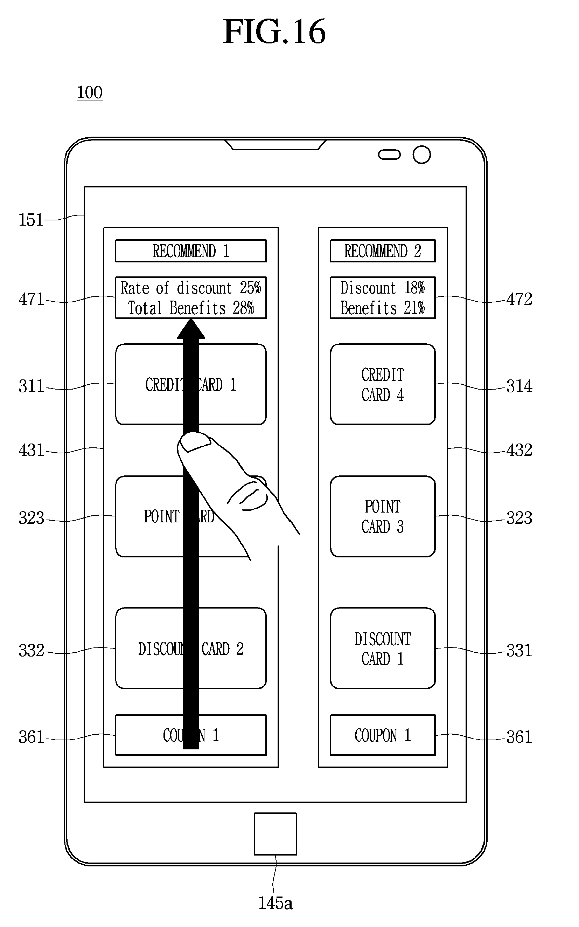

In an embodiment, the control unit 180 may recognize a user input including swiping on one or more card images displayed on the display unit 151, as a user input for paying goods or services that the payment terminal 200 waits for payment. Related descriptions are provided with reference to Fig. 16. Fig. 16 illustrates a user input for payment according to an embodiment.

Referring to Fig. 16, the control unit 180 may cause displaying, on the display unit 151, of the first recommended payment combination information window 431 for the first recommended payment combination and the second recommended payment combination information window 432 for the second recommended payment combination. Further, the control unit 180 may recognize a user input including swiping upwardly from the first coupon image 361 that is displayed in the first recommended payment combination information window 431, also touching the second discount card image 332, the third point card image 323, and the first credit card image 311 that are displayed in the first recommended payment combination information window 431. Thus, the control unit 180 may pay with the first credit card, the third point card, the second discount card, and the first coupon that are included in the first recommended payment combination. Related descriptions are provided below.

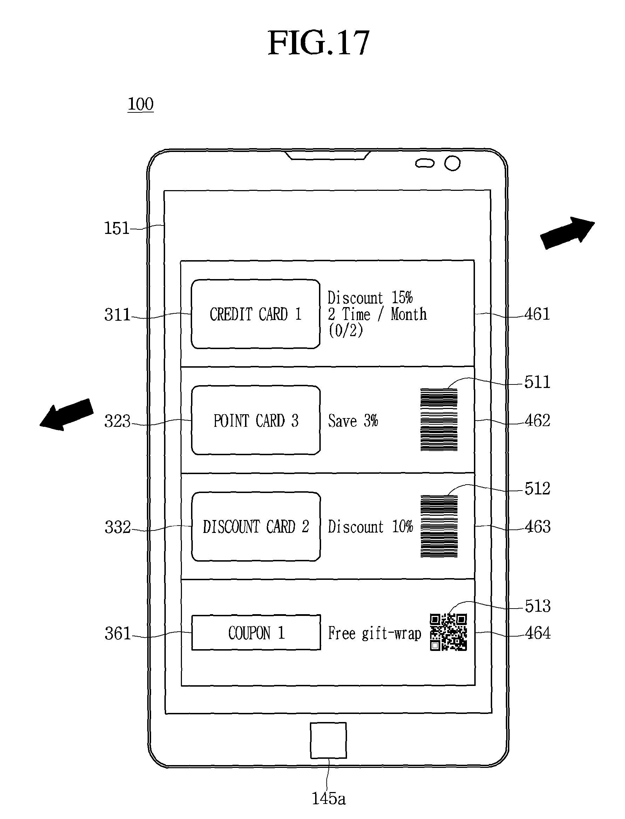

In another embodiment, the control unit 180 may sense a motion of shaking the terminal 100, as a user input for paying for goods or services that the payment terminal 200 waits for payment. Related descriptions are provided with reference to Fig. 17. Fig. 17 illustrates a user input for payment according to another embodiment.

Referring to Fig. 17, the control unit 180 may cause displaying, on the display unit 151, of the first block 461, the second block 462, the third block 463, and the fourth block 464 for the first credit card, the third point card, the second discount card, and the first coupon, respectively, that are included in the first recommended payment combination. Further, the control unit 180 may sense a motion of shaking the terminal 100, as a user input for paying for goods or services that the payment terminal 200 waits for payment. For example, the sensing unit 140 may sense the motion of the terminal 100 shaken by a user via one or more of an acceleration sensor, a gravity sensor, a gyroscope sensor, and a motion sensor that are included in the sensing unit 140. Furthermore, the control unit 180 may obtain information about the motion of the terminal 100 sensed from the sensing unit 140. Thus, the control unit 180 may pay with the first credit card, the third point card, the second discount card, and the first coupon that are included in the first recommended payment combination in response to the user input. Related described are provided below.

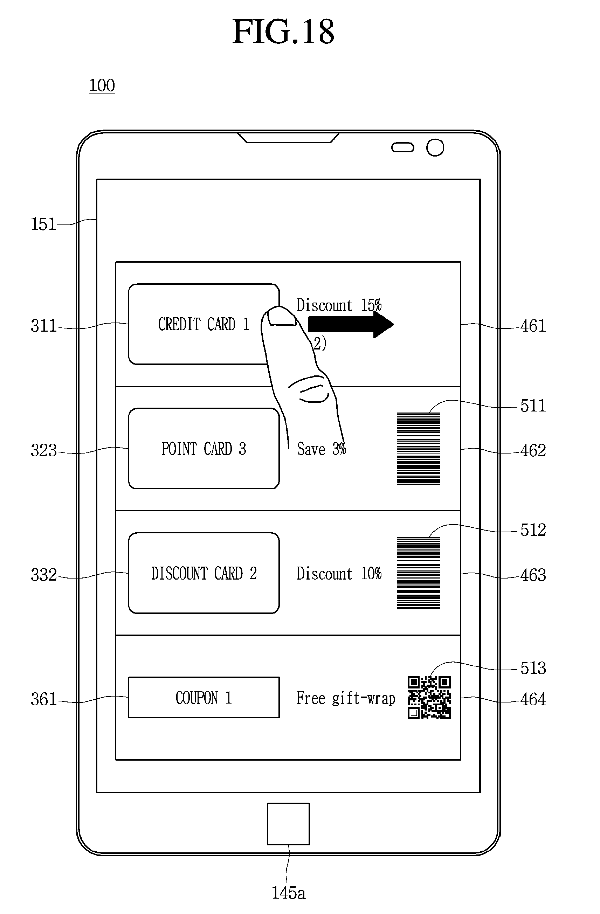

In another embodiment, the control unit 180 may recognize a user input applied to a single card image displayed on the display unit 151 or a region corresponding to a card image, as a user input for paying for goods or services to the payment terminal 200 waiting for payment. Related descriptions are provided with reference to Figs. 18 to 20. Fig. 18 illustrates a user input for payment according to another embodiment.

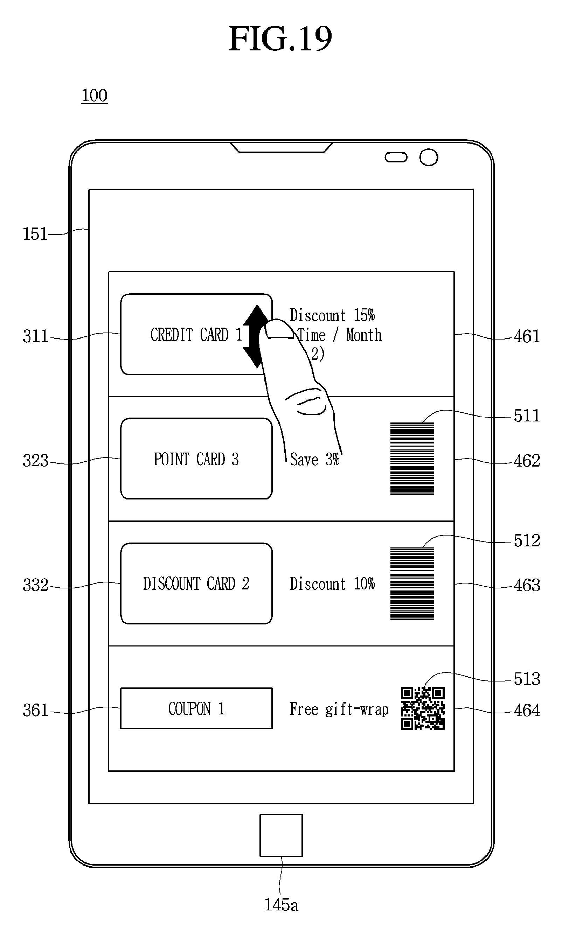

Referring to Fig. 18, the control unit 180 may cause displaying, on the display unit 151, of the first block 461, the second block 462, the third block 463, and the fourth block 464 for the first credit card, the third point card, the second discount card, and the first coupon, respectively, that are included in the first recommended payment combination. Further, the control unit 180 may recognize a user input that includes swiping the first block 461, as a user input for paying for goods or services to the payment terminal 200 waiting for payment. Thus, the control unit 180 may also pay with the first credit card corresponding to the first clock 461 or pay with the first credit card, the third point card, the second discount card, and the first coupon that are included in the first recommended payment combination. Related descriptions are provided below. Fig. 19 illustrates a user input for payment according to another embodiment.

Referring to Fig. 19, the control unit 180 may cause displaying, on the display unit 151, of the first block 461, the second block 462, the third block 463, and the fourth block 464 for the first credit card, the third point card, the second discount card, and the first coupon, respectively, that are included in the first recommended payment combination. In addition, the control unit 180 may recognize a user input that includes a double-tap touch on the first block 461, as a user input for paying for goods or services to the payment terminal 200 waiting for payment. Thus, the control unit 180 may also pay with the first credit card corresponding to the first block 461 or pay with the first credit card, the third point card, the second discount card, and the first coupon that are included in the first recommended payment combination. Related descriptions are provided below.

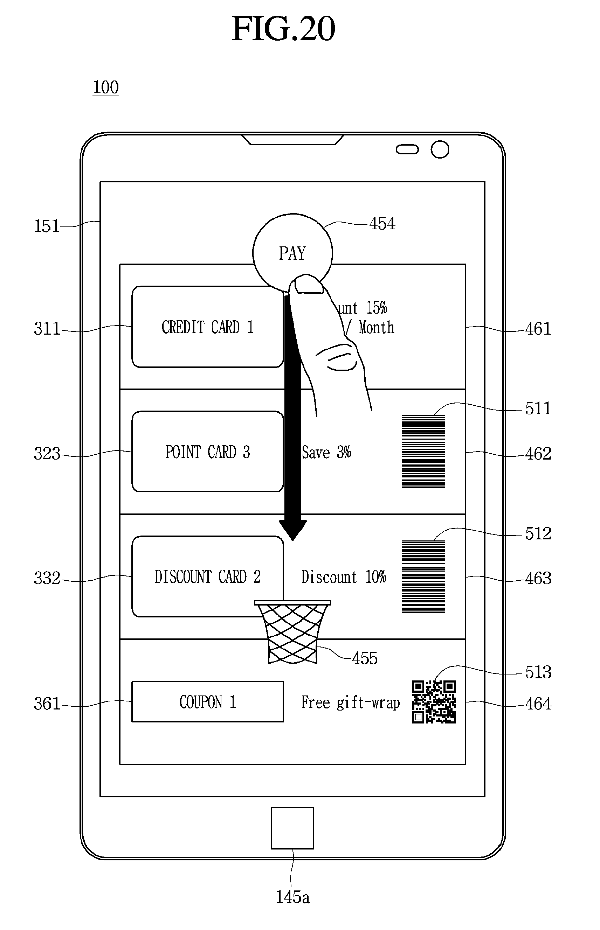

In another embodiment, the control unit 180 may recognize a user input that includes dragging a specific icon displayed on the display unit 151 and dropping it into a specific region as a user input for paying for goods or services to the payment terminal 200 waiting for payment. Fig. 20 illustrates a user input for payment according to another embodiment.

Referring to Fig. 20, the control unit 180 may cause displaying, on the display unit 151, of the first block 461, the second block 462, the third block 463, and the fourth block 464 for the first credit card, the third point card, the second discount card, and the first coupon, respectively, that are included in the first recommended payment combination. Further, the control unit 180 may cause displaying, on the display unit 151, of a first icon 454 and a second icon 455 for payment. The control unit 180 may recognize a user input that includes dragging the first icon 454 and dropping it into the second icon 455 as a user input for paying for goods or services to the payment terminal 200 waiting for payment. Thus, the control unit 180 may pay with the first credit card, the third point card, the second discount card, and the first coupon that are included in the first recommended payment combination. Related descriptions are provided below.

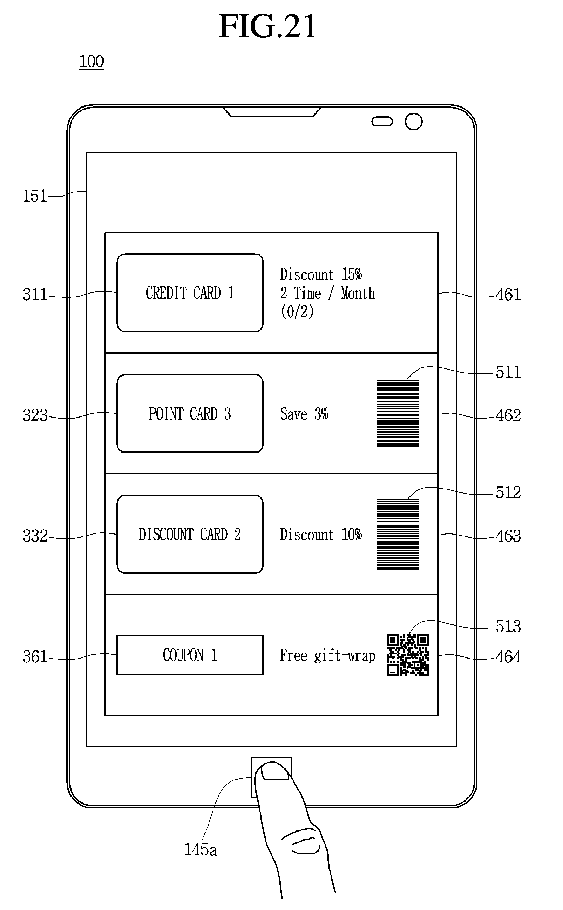

In another embodiment, the control unit 180 may recognize a user input that enables the fingerprint recognition sensor 145 to recognize fingerprint as a user input for paying for goods or services to the payment terminal 200 waiting for payment. Fig. 21 illustrates fingerprint recognition for payment according to an embodiment.

Referring to Fig. 21, the control unit 180 may cause displaying, on the display unit 151, of the first block 461, the second block 462, the third block 463, and the fourth block 464 for the first credit card, the third point card, the second discount card, and the first coupon, respectively, that are included in the first recommended payment combination. Further, the control unit 180 may recognize a user input that enables the front fingerprint recognition sensor 145a to recognize fingerprint as a user input for paying for goods or services to the payment terminal 200 waiting for payment. Thus, the control unit 180 may pay with the first credit card, the third point card, the second discount card, and the first coupon that are included in the first recommended payment combination. Related descriptions are provided below.

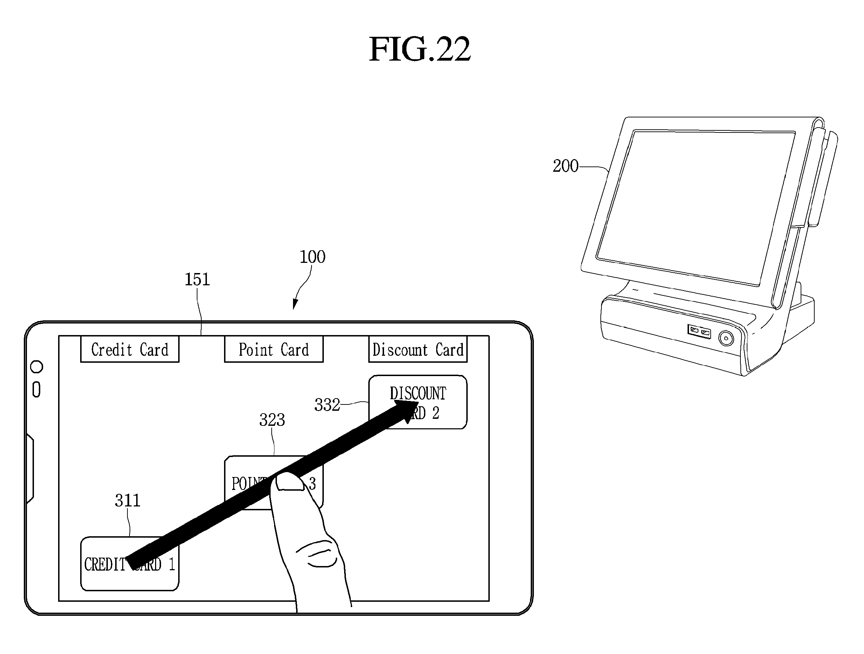

In another embodiment, the control unit 180 may recognize a user input that includes swiping one or more card images displayed on the display unit 151 in a direction corresponding to the payment terminal 200, as a user input for paying for goods or services to the payment terminal 200 waiting for payment. Fig. 22 represents a user input for payment related to a direction corresponding to a payment terminal according to an embodiment.

Referring to Fig. 22, the control unit 180 may cause displaying, on the display unit 151, of the first credit card image 311, the third point card image 323, and the second discount card image 332 corresponding respectively to the first credit card, the third point card, and the second discount card, and the first coupon that are included in the first recommended payment combination. For example, the control unit 180 may arrange the first credit card image 311, the third point card image 323, and the second discount card image 332 in a direction corresponding to the payment terminal 200 and cause displaying of them on the display unit 151. Further, the control unit 180 may recognize a user input that includes swiping the first credit card image 311, the third point card image 323, and the second discount card image 322 in a direction corresponding to the payment terminal 200, as a user input for paying for goods or services to the payment terminal 200 waiting for payment. Thus, the control unit 180 may pay with the first credit card, the third point card, and the second discount card that are included in the first recommended payment combination. Related descriptions are provided below.

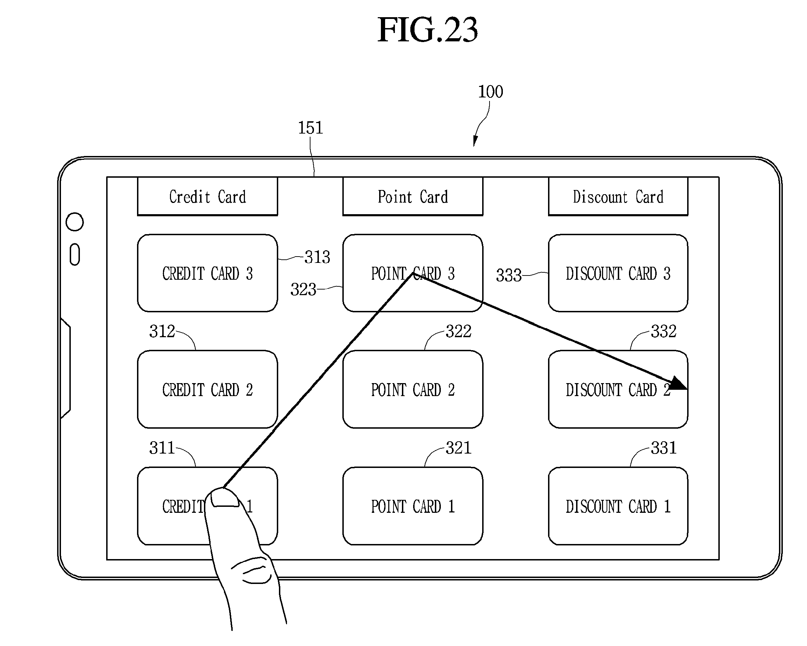

In another embodiment, the control unit 180 may recognize a user input that includes swiping one or more card images to be used for payment among the plurality of card images displayed on the display unit 151, as a user input for paying for goods or services to the payment terminal 200 waiting for payment. Thus, the control unit 180 may perform a payment process for paying for goods or services to the payment terminal 200 waiting for payment based on card information corresponding to a card image included in a path of the user input. Fig. 23 represents a user input path for payment according to an embodiment.

Referring to Fig. 23, the control unit 180 may cause displaying, on the display unit, the first credit card image 311, the second credit card image 312, and the third credit card image 313 corresponding to payment means, the first point card image 321, the second point card image 322, and the third point card image 323 corresponding to point cards, and the first discount card image 331, the second discount card image 332, and the third discount card image 333 corresponding to discount cards. The control unit 180 may recognize a user input that includes sequentially swiping the first credit card image 311, the third point card image 323, and the second discount card image 332 displayed on the display unit 151. Thus, the control unit 180 may pay with the first credit card, the third point card and the second discount card.

Descriptions of the user input for payment as described above are examples and the embodiment is not limited thereto. Thus, various inputs may be applied to the user input unit 130 for payment according to a user or designer choice.

Referring back to Fig. 6, the control unit 180 of the terminal 100 determines, based on the terminal usage pattern of a user, whether the user is a user corresponding to payment information in step S215, and generates a payment signal in step S217 if the user correspondence is verified.

The control unit 180 of the terminal 100 may determine whether a user who performed a user input for payment is the same as a user corresponding to payment information to be used for payment, based on the terminal usage pattern of the user who performed the user input for payment.

In this example, the user corresponding to payment information may mean a person who has an authority to use each of a payment means, a rewarding means and a discount means. Thus, the process of determining, by the control unit 180, whether the user who performed the user input for payment is the same as the user corresponding to payment information to be used for payment may include the process of determining whether the user corresponding to payment information has a user who has an authority to use each of a payment means, a rewarding means and a discount means.

In particular, the control unit 180 of the terminal 100 may collect the terminal usage pattern of a user and determine, based on the collected terminal usage pattern of the user, whether the user who performed the user input for payment is the same as the user corresponding to payment information to be used for payment. In this example, the terminal usage pattern of the user may mean the pattern of a user who uses the terminal 100. For example, the terminal usage pattern of the user may include one or more of a pressure of the touch input of a user; a touch area according to the touch input; a character input pattern; a typing pattern; a distance, a speed and a pattern of a swipe input; a distance, a speed and a pattern of a zoom-in or zoom-out input; a speed and a pattern of a tap input; a pattern in which the terminal 100 is held; and an angle at which the terminal 100 is held.

In this example, the character input pattern may include one or more of a key input time, a frequent typographical error pattern, a special character input pattern, and a finger usage pattern used when a key input is performed.

In addition, the pattern in which the terminal 100 is held and the angle at which the terminal 100 is held may include one or more of the location and direction of a hand with which the user holds the terminal 100, a region of the terminal 100 which a hand with which the user holds the terminal 100 touches, and an angle between the terminal 100 and a user's hand.

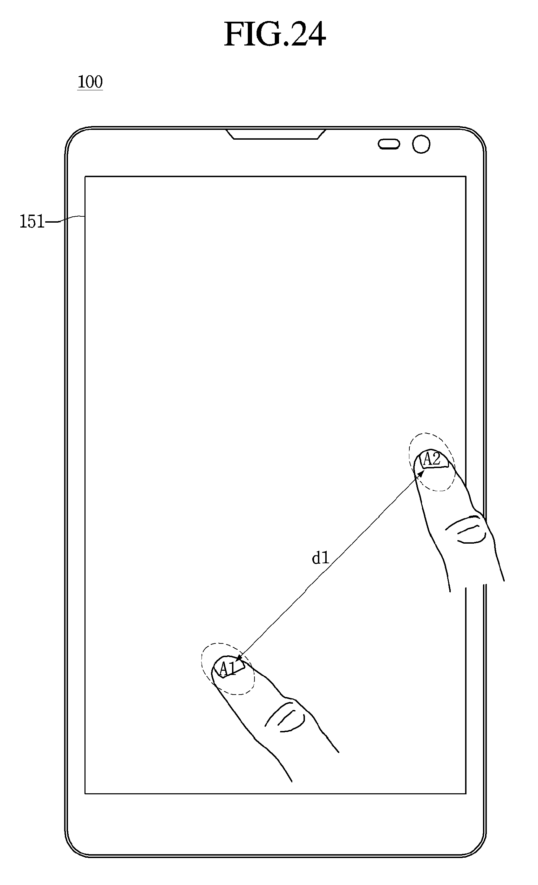

An embodiment of the terminal usage pattern recognition of the user of the terminal 100 is described with reference to Fig. 24. Fig. 24 illustrates the touch pattern recognition of a user according to an embodiment.

Referring to Fig. 24, the control unit 180 may recognize the touch pattern of a user input that includes two fingers simultaneously touching the display unit 151. In particular, the control unit 180 may recognize the touch area A1 of a finger and the touch area A2 of another finger from the user input that includes the two fingers simultaneously touching the display unit 151. Also, the control unit 180 may recognize the distance d1 between the finger and the other finger and further recognize a variation and a variation speed of the distance between the finger and the other finger. Further, the control unit 180 may recognize the touch pressure of the finger and the touch pressure of the other finger from the user input that includes the two fingers simultaneously touching the display unit 151.

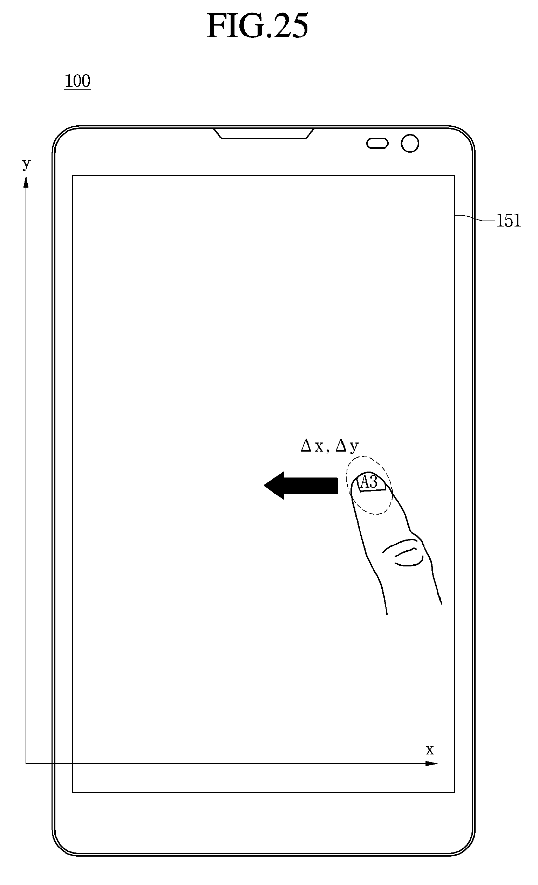

An embodiment of the terminal usage pattern recognition of the user of the terminal 100 is described with reference to Fig. 25. Fig. 25 illustrates the touch pattern recognition of a user according to another embodiment.

Referring to Fig. 25, the control unit 180 may recognize the touch pattern of a user input that includes swiping on the display unit 151 in one direction. In particular, the control unit 180 may recognize the touch area A3 of a finger from the user input that includes swiping on the display unit 151 in the left direction. Also, the control unit 180 may recognize variations in the X axis and Y axis of the user input including the swiping. Thus, the control unit 180 may recognize a variation and an input speed of a touch input according to the user input including the swiping.

Descriptions of the terminal usage pattern collection and recognition of the user as described above are examples and the embodiment is not limited thereto. Thus, it is possible to collect and recognize various usage patterns according to a user or designer choice.

Also, the control unit 180 may determine, based on biometrical information of a user, whether the user who has performed the user input for payment is the same as the user corresponding to payment information to be used for payment. For example, the control unit 180 may determine, based on the fingerprint of a user recognized via the fingerprint recognition sensor 145, whether the user who performed the user input for payment is the same as the user corresponding to payment information to be used for payment.

The control unit 180 of the terminal 100 may also apply a degree of authentication for determining the identity of the user differently according to the importance of payment information to be used for payment. For example, the control unit 180 may perform user authentication by recognizing a password input or a user's biometrical information input to determine whether the user who performed the user input is the same as a user corresponding to credit card information. For another example, the control unit 180 may perform user authentication based on a terminal usage pattern such as a touch input pattern of the user to determine whether the user who performed the user input is the same as a user corresponding to point card information.

Also, the control unit 180 of the terminal 100 may raise the degree of authentication for the terminal usage pattern of the user or biometrical information of the user for determining the identity of the user when the recognized terminal usage pattern or biometrical information of the user is below a certain reference level. For example, the control unit 180 may require input of a password for authenticating a user when the recognized terminal usage pattern of the user is below a certain reference level. For another example, the control unit 180 may also require the fingerprint recognition sensor 145 to recognize the fingerprint of the user when the recognized terminal usage pattern of the user is below a specific threshold reference level.

The control unit 180 of the terminal 100 may determine, based on the collected and recognized terminal usage pattern of the user or the biometrical information of the user, whether the user who performed the user input for payment is the same as the user corresponding to payment information to be used for payment. The control unit 180 may generate a payment signal corresponding to payment information when it is determined that the user who has performed the user input for payment is the same as the user corresponding to payment information to be used for payment.

In particular, the control unit 180 may generate a payment signal including one or more pieces of card information corresponding to payment information that the user uses for payment. For example, the card information may include a card number, a user name, an expiration date, and a security code.

For example, the control unit 180 may generate a payment signal including card information on each of the first credit card, the third point card, the second discount card, and the first coupon corresponding to the first recommended payment combination that is selected payment information, when it is determined that the user who performed the user input for payment is the same as the user corresponding to the payment information to be used for payment.

When the control unit 180 generates a payment signal including pieces of card information, it may also generate a plurality of payment signals corresponding to the pieces of card information or generate a payment signal including the pieces of card information.

In an embodiment, the control unit 180 may generate a first payment signal corresponding to the first credit card, a second payment signal corresponding to the third point card, a third payment signal corresponding to the second discount card, and a fourth payment signal corresponding to the first coupon, when it generates a payment signal including card information on each of the first credit card, the third point card, the second discount card, and the first coupon corresponding to the first recommended payment combination that is selected payment information.

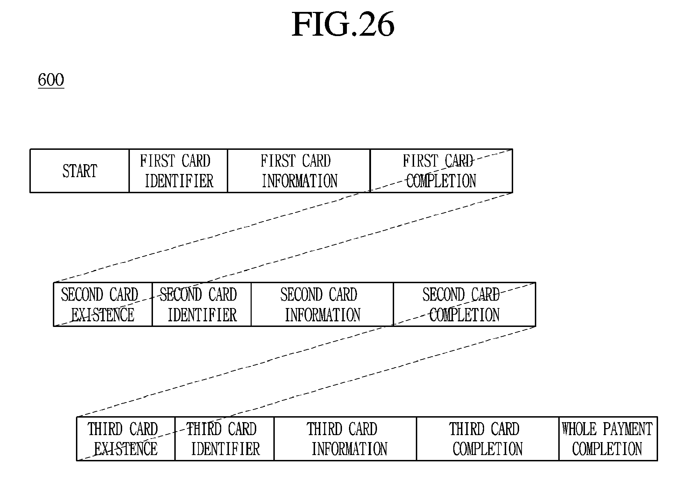

In another embodiment, the control unit 180 may generate a single payment signal including card information on each of the first credit card, the third point card, the second discount card, and the first coupon corresponding to the first recommended payment combination that is selected payment information. Thus, the control unit 180 may generate a payment signal that has a multi data structure including card information on each of the first credit card, the third point card, the second discount card and the first coupon. Related descriptions are provided in detail with reference Fig. 26. Fig. 26 is a conceptual view of the packet structure of a payment signal having a multi data structure according to an embodiment.

Referring to Fig. 26, the control unit 180 may generate a payment signal that has a multi data structure including first card information, second card information, and third card information. The packet structure 600 of the payment signal having the multi data structure may be made up of sections of start, first card identifier, first card information, first card completion, second card existence, second card identifier, second card information, second card completion, third card existence, third card identifier, third card information, third card completion, and whole payment completion. In addition, the payment signal having the multi data structure may be generated in a single data packet or generated in a plurality of data packets through division.

The control unit 180 may generate a payment signal in forms corresponding to various communication methods, when generating the payment signal. For example, the control unit 180 may generate a payment signal including one or more pieces of card information, in a form corresponding to one of a magnetic signal and an NFC signal. Also, the control unit 180 may generate the payment signal including the one or more pieces of card information, in a form corresponding to one of communication methods including Bluetooth, RFID, IrDA, UWB, ZigBee, and NFC that may be transmitted through the short range communication module 114.

Referring back to Fig. 6, the terminal 100 transmits the generated payment signal to the payment terminal 200 in step S219. The control unit 180 may transmit the generated payment signal to the payment terminal 200 via the wireless communication unit 110.

For example, the control unit 180 may cause transmission, to the payment terminal 200, of the generated payment signal by using one or more of communication methods including Bluetooth, RFID, IrDA, UWB, ZigBee, and NFC via the short range communication module 114.

The control unit 180 may cause transmission of the generated payment signal to the payment terminal 200 by using a single or plurality of data packets. Thus, the control unit 180 may cause transmission of the payment signal to the payment terminal 200 according to the data packet structure of the generated payment signal. Further, the terminal 100 may display information about a degree of transmission of the payment signal or about a payment status of the payment terminal 200 according to the transmission of the generated payment signal.

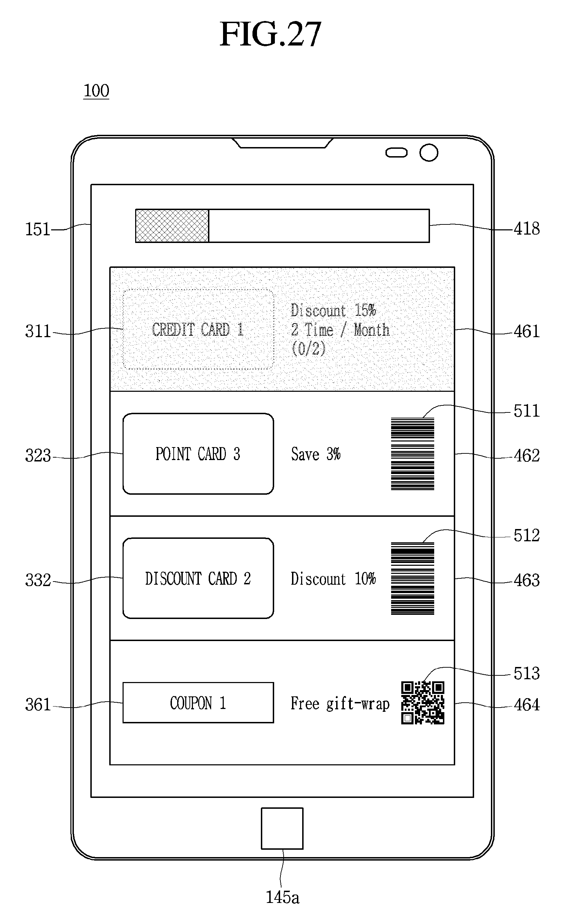

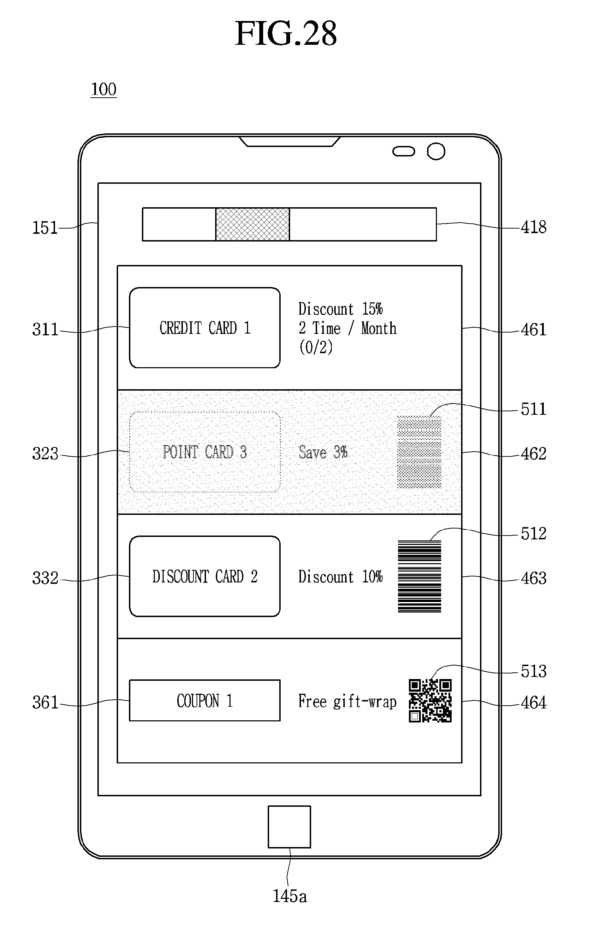

An embodiment is described with reference to Figs. 27 and 28. Figs. 27 and 28 illustrate displaying a payment status according to an embodiment.

Referring to Fig. 27, the control unit 180 may cause displaying, on the display unit 151, of the first block 461, the second block 462, the third block 463, and the fourth block 464 for the first credit card, the third point card, the second discount card, and the first coupon, respectively, that are included in the first recommended payment combination. Further, the control unit 180 may cause displaying of a region corresponding to card information being used for payment distinguishably from other regions according to the payment status. For example, when the first credit card is being used for payment, the control unit 180 may inactivate the first block 461 corresponding to the first credit card and activate the second block 462, the third block 463 and the fourth block 464 corresponding to other card information, as shown in Fig. 27.

Furthermore, the control unit 180 may cause displaying, on the display unit 151, of a progress bar 418 representing the payment status. Thus, the control unit 180 may cause displaying of a region corresponding to the payment status among the entire region of the progress bar 418 distinguishably from the rest of the progress bar 418. Thus, the control unit 180 may cause displaying of a region corresponding to the first credit among the entire region of the progress bar 418 distinguishably from the rest of the progress bar 418.

Moreover, when the third point card is being used for payment, the control unit 180 may inactivate the second block 462 corresponding to the third point card and activate the first block 461, the third block 463 and the fourth block 464 corresponding to other card information, as shown in Fig. 28. The control unit 180 may cause displaying of a region corresponding to the third point card among the entire region of the progress bar 418 distinguishably from the rest of the progress bar 418.

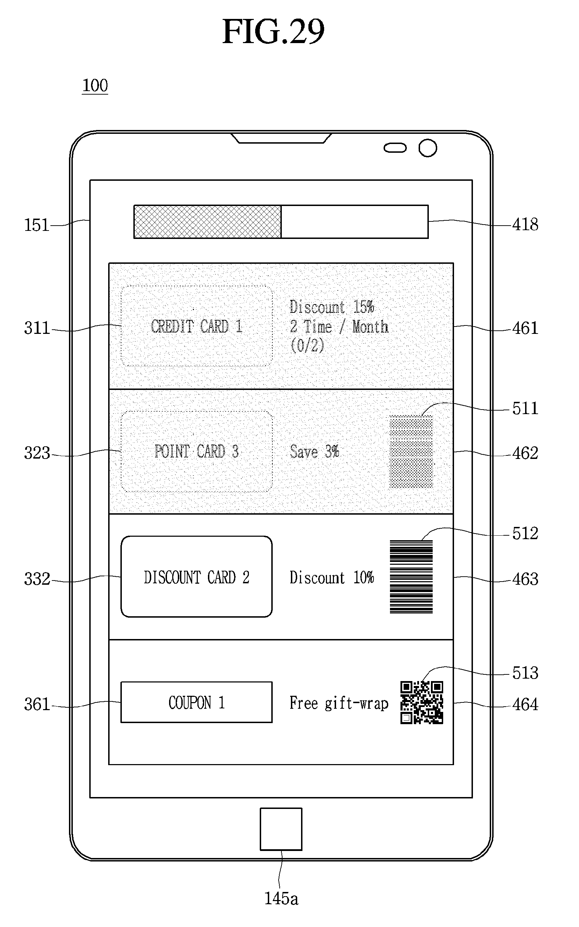

Another embodiment is described with reference to Fig. 29. Fig. 29 illustrates displaying a payment status according to another embodiment.

Referring to Fig. 29, the control unit 180 may cause displaying, on the display unit 151, of the first block 461, the second block 462, the third block 463, and the fourth block 464 for the first credit card, the third point card, the second discount card, and the first coupon, respectively, that are included in the first recommended payment combination. Further, the control unit 180 may cause displaying of regions corresponding to card information that has been used or is being used for payment distinguishably from other regions according to the payment status. For example, when the first credit card has been used for payment and the third point card is being used for payment, the control unit 180 may inactivate the first block 461 corresponding to the first credit card and the second block 462 corresponding to the third point card, and activate the third block 463 and the fourth block 464 corresponding to other card information, as shown in Fig. 29.

Furthermore, the control unit 180 may cause displaying, on the display unit 151, of the progress bar 418 representing the payment status. Thus, the control unit 180 may cause displaying of a region corresponding to the payment status among the entire region of the progress bar 418 distinguishably from the rest of the progress bar 418. Thus, the control unit 180 may cause displaying of a region corresponding to the first credit card and a region corresponding to the third point card among the entire region of the progress bar 418 distinguishably from the rest of the progress bar 418.

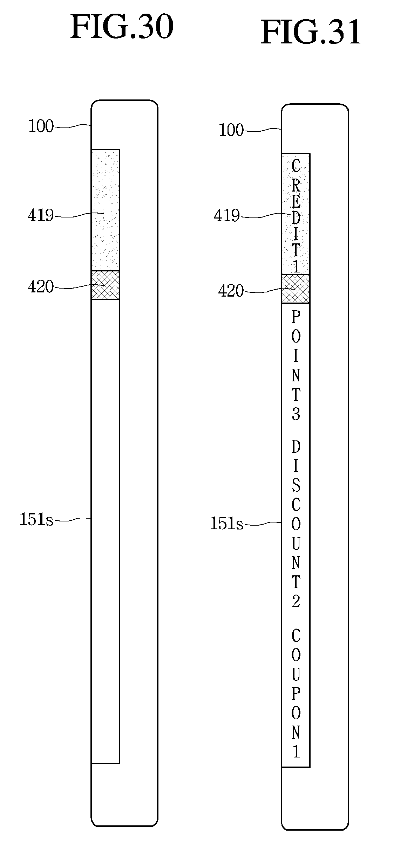

Another embodiment is described with reference to Figs. 30 and 31. Figs. 30 and 31 illustrate displaying a payment status on a side display unit according to an embodiment.

Referring to Fig. 30, the terminal 100 may further include a side display unit 151s on one side or both sides of the terminal 100. The side display unit 151s may be a component included in the display unit 151 or a separate component. The control unit 180 may cause displaying, on the side display unit 151s, of information about the payment status of the payment terminal 200 according to transmission of the generated payment signal. For example, the control unit 180 may cause displaying of a region corresponding to the payment status among the entire region of the side display unit 151s distinguishably from other regions, as shown in Fig. 30. For example, the control unit 180 may cause displaying, on the side display unit 151s, of a first region 419 corresponding to the first credit card distinguishably from other regions when the first credit card is being used for payment among the first credit card, the third point card, the second discount card, and the first coupon included in the first recommended payment combination.

Further, the control unit 180 may also cause displaying, on the side display unit 151s, of a region 420 for distinguishing the first region 491 from other regions. Also, the control unit 180 may cause displaying, on the side display unit 151s, of card information according to payment. Referring to Fig. 31, the control unit 180 may cause displaying, on a the side display unit 151s, of regions each corresponding to a corresponding one of the first credit card, the third point card, the second discount card, and the first coupon such that a corresponding card name is displayed in each region.

Descriptions of how to display the payment status as described above are examples and the embodiment is not limited thereto. Thus, it is possible to display the payment status through various methods according to a user or designer choice.

The control unit 180 of the terminal 100 may also cause displaying of a barcode or QR code for a card supporting payment through an image, such as a barcode or QR code, when the payment signal is transmitted. Thus, the terminal 100 may also transmit the payment signal to the payment terminal 200 and display an image, such as a barcode or QR code, for payment on the display unit 151 so that the payment terminal 200 may process the payment by using the image.

Referring back to Fig. 6, the control unit 210 of the payment terminal 200 performs payment based on one or more pieces of card information corresponding to the transmitted payment signal in step S221. The control unit 210 of the payment terminal 200 may receive the payment signal transmitted from the terminal 100 via the communication unit 230. Further, the control unit 210 may process payment for goods or services to be paid at the payment terminal 200 based on one or more pieces of card information corresponding to the transmitted payment signal. For example, when card information corresponding to the payment signal includes card information for each of the first credit card, the third point card, the second discount card and the first coupon, the control unit 210 may process payment for goods or services to be paid, based on each of card information about the first credit card, card information about the third point card, card information about the second discount card, and card information about the first coupon.

The control unit 210 of the payment terminal 200 generates a payment approval signal for the payment in step S223 and transmits the generated payment approval signal to the terminal 100 in step S225. The control unit 210 may generate the payment approval signal for the payment. The control unit 210 may also generate a single payment approval signal corresponding to payment for each of pieces of card information or generate a plurality of payment approval signals, when payment for each of pieces of card information is processed. For example, the control unit 210 may also generate a single payment approval signal corresponding to payment for each of the first credit card, the third point card, the second discount card, and the first coupon when payment for each of the first credit card, the third point card, the second discount card, and the first coupon corresponding to the first recommended payment combination is processed.

In addition, the control unit 210 may cause transmission, to the terminal 100, of the generated payment approval signal by using one or more of communication methods including Bluetooth, RFID, IrDA, UWB, ZigBee, and NFC via the communication module 230.

The control unit 180 of the terminal 100 causes displaying of details about the payment approval based on the transmitted payment approval signal in step S227. The control unit 180 may receive the payment approval signal transmitted from the payment terminal 200 via the wireless communication unit 110.

For example, the control unit 180 may receive the payment approval signal transmitted from the payment terminal 200 via the short range communication module 114. Further, the control unit 180 may cause displaying of information about the details of the payment approval on the display unit 151 based on the received payment approval signal. For example, the control unit 180 may cause displaying, on the display unit 151, of a receipt according to the details of the payment approval.

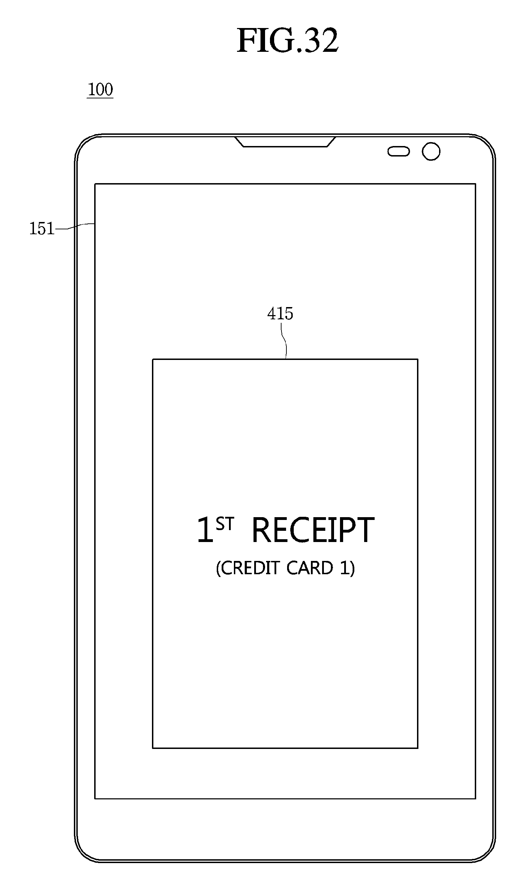

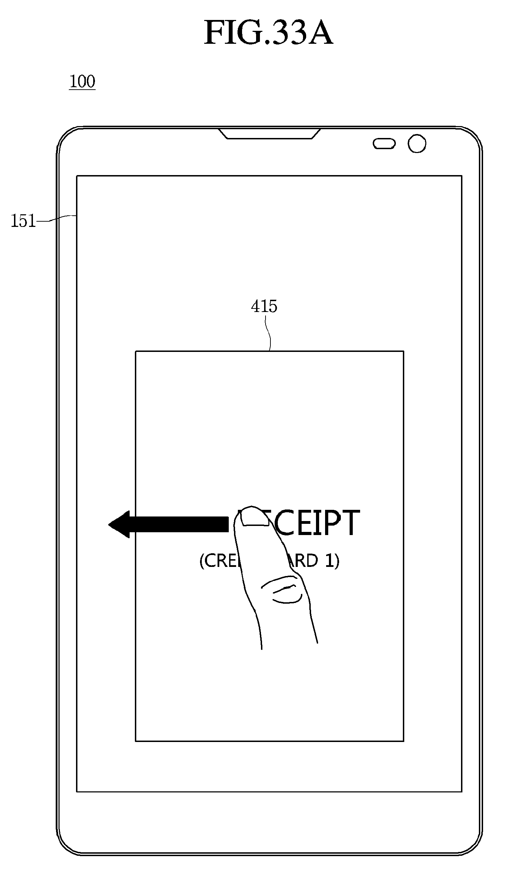

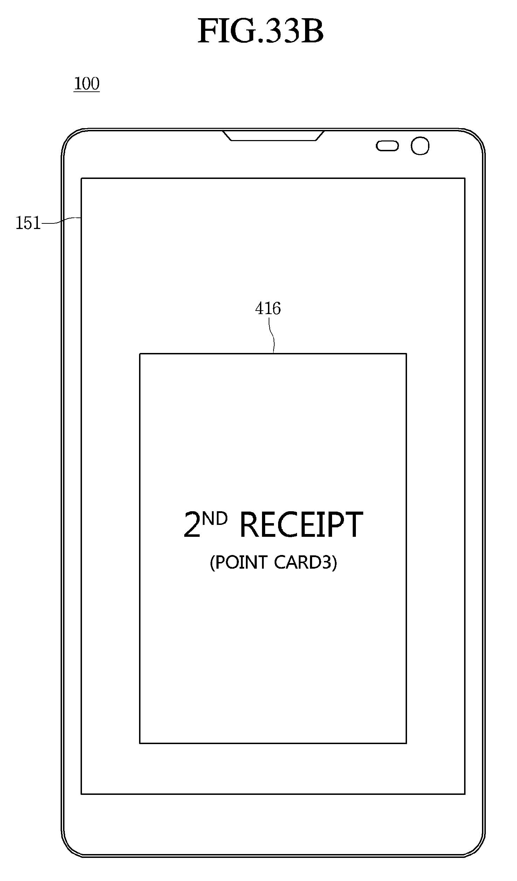

Related descriptions are provided with reference to Figs. 32, 33A, and 33B. Fig. 32 illustrates displaying payment approval information according to an embodiment. Figs. 33A and 33B illustrate a user input for displaying another payment approval information according to an embodiment.

Referring to Fig. 32, the control unit 180 may cause displaying, on the display unit 151, of a first payment approval receipt 415 including payment approval information according to payment processed by using card information of the first credit card, based on the received approval information. Further, the control unit 180 may also cause displaying of another payment that different from the payment approval information displayed on the display unit 151. For example, the control unit 180 may recognize a user input that includes swiping the first payment approval receipt 415 in the left direction, as a user input for displaying payment approval information according to payment processed by using another card information, as shown in Fig. 33A. Thus, the control unit 180 may cause displaying, on the display unit 151, of a second payment approval receipt 416 including payment approval information according to payment processed by using the third point card, as shown in Fig. 33B. Furthermore, the control unit 180 may also cause re-displaying of the first payment approval receipt 415 on the display unit 151 when a user input that includes swiping the second payment approval receipt 416 in the right direction is received via the display unit 151.

Descriptions on payment approval as described above are examples and the embodiment is not limited thereto. Thus, it is possible to display details of the payment approval through various methods according to a user or designer choice.

When payment is performed according to a selected recommended payment combination, the control unit 180 may store information about a recommended payment combination with which payment has been processed, to be mapped to information about a store at which the payment has been processed. For example, the control unit 180 may store information about the first recommended payment combination to be mapped to store A when payment has been processed at store A by using card information according to the first recommended payment combination as described above.

Thereafter, when payment is attempted at store A, the terminal 100 may provide, to a user, information about the first recommended payment combination stored and also perform a payment operation based on the information of the first recommended payment combination. The control unit 180 may also generate one integrated card including pieces of card information that is included in the recommended payment combination. Further, the control unit 180 may also generate an integrated card image corresponding to the generated integrated card.

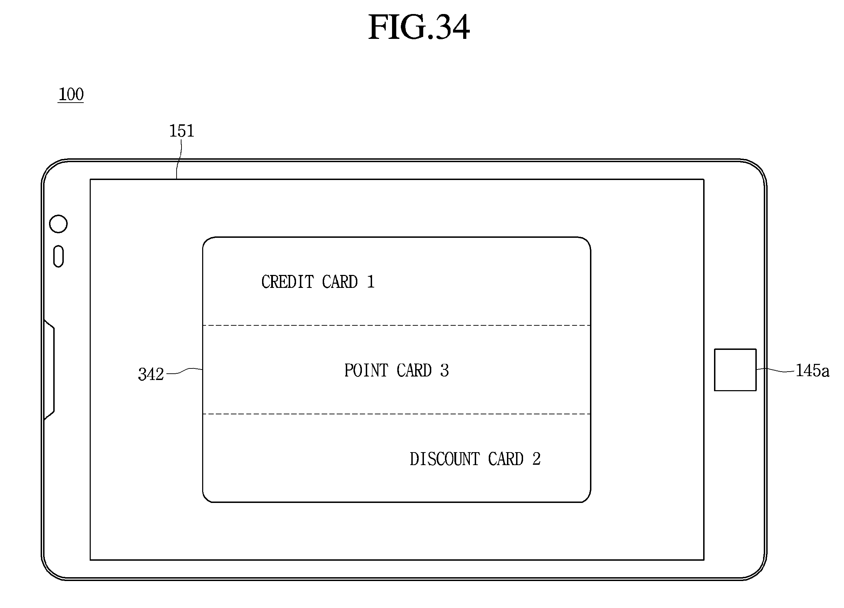

Related descriptions are provided with reference Fig. 34. Fig. 34 illustrates displaying an integrated card image according to an embodiment.

Referring to Fig. 34, the control unit 180 may generate a first integrated card that includes card information of the first credit card, the third point card, and the second discount card included in the first recommended payment combination with which payment has been processed. Further, the control unit 180 may generate a first integrated card image 342 corresponding to the first integrated card. Also, the control unit 180 may cause displaying, on the display unit 151, of the first integrated card image 342 generated. The control unit 180 may cause transmission, to the terminal 200, of an integrated payment signal for card information of each of the first credit card, the third point card and the second discount card that is included in the first integrated card based on a user input applied to the first integrated card image 342. Furthermore, the payment terminal 200 may process payment for goods or services to be paid at the payment terminal 200 based on the transmitted integrated payment signal.

Referring back to Fig. 6, the control unit 180 of the terminal 100 stores details of the payment approval in step S229. The control unit 180 may store, in the memory 160, one more details included in the details of the payment approval. For example, the control unit 180 may store, in the memory 160, particular information according to the details of the payment approval. Thus, the control unit 180 may store, in the memory 160, information about a store at which payment has been processed, information about paid goods or services, card information used for payment, and information of payment amount and time.

According to a terminal and an operating method thereof according to embodiments, a user may obtain an optimal payment combination that can be used at a store at which payment is processed. Thus, it would be possible to perform complex payment processes conveniently using various payment means as described above.

Moreover, a terminal according to embodiments may provide high security related to a payment function by employing user authentication using various methods.

The above-described embodiments may be implemented as a computer readable code on a medium on which a program has recorded. The computer readable medium includes all types of recording devices that store data capable of being read by a computer system. Examples of the computer readable medium include a hard disk drive (HDD), a solid state disk (SSD), a silicon disk drive (SDD), a ROM, a RAM, a CD-ROM, a magnetic tape, a floppy disk, and an optical data storage device, and also include a thing that is implemented in the form of carrier wave (e.g., transmission through the internet). Also, the computer may include the control unit 180 of the terminal. Thus, the detailed description should not be construed as limitative in every aspect and should be considered as exemplary. The scope of embodiments should be determined by the reasonable analysis of the following claims and all changes within the equivalent scope of embodiments are included in the scope of embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for operating a terminal (100) configured to transmit information for payment to a payment terminal (200), the method comprising:
receiving, via a wireless communication unit (110) configured to communicate with the payment terminal (200), store information for payment to a store corresponding to the payment terminal (200), the store information including payment information;
generating (S209) at least one recommended payment combination information based on the received store information, one of the at least one recommended payment combination information including at least two different types of information that are usable with the store information; and
transmitting (S219), to the payment terminal (200), the information for payment corresponding to one of the at least one recommended payment combination information.

2. The method according to claim 1, wherein the at least two types of information comprise at least two among information of a payment means for payment, information of a point collecting means for a reward point, or information of a discount means for a discount service.

3. The method according to claim 2, wherein the generating of the at least one recommended payment combination information comprises generating at least two recommended payment combinations, each of the at least two recommended payment combinations comprising at least one of the payment means, the point collecting means, or the discount means that is usable at the store.

4. The method according to claim 3, wherein the generating of the at least two recommended payment combinations comprises calculating at least discount rates or rewarding rates of candidate payment combinations such that the at least two recommended payment combinations are generated based on the calculated at least discount rates or rewarding rates that are greater than a threshold rate.

5. The method according to claim 1, wherein the transmitting (S219) of the information for payment comprises:
recognizing a user input for selecting the one of the at least one recommended payment combination information;
generating a signal corresponding to the selected one of the at least one recommended payment combination information in response to the user input; and
transmitting the generated signal to the payment terminal (200) for processing of the payment to the store based on the selected one of the at least one recommended payment combination information.

6. The method according to claim 1, further comprising:
receiving, from the payment terminal (200), payment approval information in response to the transmitted information for payment; and
displaying (S227) information relating to the payment to the store based on the received payment approval information.

7. The method according to claim 1, further comprising storing the one of the at least one recommended payment combination information transmitted to the payment terminal (200) for mapping of the stored one of the at least one recommended payment combination information to the store information.

8. A terminal (100) configured to transmit information for payment to a payment terminal (200), the terminal comprising:
a display (151);
a wireless communication unit (110) configured to communicate with the payment terminal (200) corresponding to a store; and
a controller (180) configured to:
receive store information for payment to the store via the wireless communication unit, the store information including payment information;
generate at least one recommended payment combination information based on the received store information, one of the at least one recommended payment combination information including at least two different types of information that are usable with the store information; and
cause the wireless communication unit (110) to transmit, to the payment terminal (200), the information for payment corresponding to one of the at least one recommended payment combination information.

9. The terminal (100) according to claim 8, wherein the at least two types of information comprise at least two among information of a payment means for payment, information of a point collecting means for a reward point, and information of a discount means for a discount service.

10. The terminal (100) according to claim 9, wherein the controller (180) is further configured to generate at least two recommended payment combinations, each of the at least two recommended payment combinations comprising at least one of the payment means, the point collecting means, or the discount means that is usable at the store.

11. The terminal (100) according to claim 10, wherein the controller (180) is further configured to calculate at least discount rates or rewarding rates of candidate payment combinations such that the at least two recommended payment combinations are generated based on the calculated at least discount rates or awarding rates that are greater than a threshold rate.

12. The terminal (100) according to claim 8, wherein the controller (180) is further configured to:
recognize a user input for selecting one of the at least one recommended payment combination information;
generate a signal corresponding to the selected one of the at least one recommended payment combination information in response to the user input; and
cause the wireless communication unit (110) to transmit the generated signal to the payment terminal (200) for processing of the payment to the store based on the selected one of the at least one recommended payment combination information.

13. The terminal (100) according to claim 12, wherein the controller (180) is further configured to generate a single payment signal having a multi data structure such that a plurality of card information included in the selected one of the at least one recommended payment combination information are transmitted to the payment terminal (200) via the single payment signal that is transmitted to the payment terminal (200).

14. The terminal (100) according to claim 8, wherein the controller (180) is further configured to:
cause the wireless communication unit (110) to receive, from the payment terminal (200), payment approval information in response to the transmitted information for payment; and
cause the display (151) to display information relating to the payment to the store based on the received payment approval information.

15. The terminal (100) according to claim 8, further comprising a memory (160) configured to store data,
wherein the controller (180) is further configured to cause the memory (160) to store the one of the at least one recommended payment combination information transmitted to the payment terminal (200) for mapping of the stored one of the at least one recommended payment combination information to the store information.
